# EUROPEAN PATENT SPECIFICATION

(11) **EP 3 420 344 B1**
(45) Date of publication and mention of the grant of the patent: **22.07.2020**
(21) Application number: 17708311.0
(22) Date of filing: 23.02.2017
(51) Int. Cl.: G01N 21/65, G01N 1/28, G01J 3/44

(54) **CELL SORTING**
ZELLSORTIERUNG
TRI CELLULAIRE

(30) Priority: 23.02.2016 GB 201603088
(43) Date of publication of application: 02.01.2019
(73) Proprietor: Oxford University Innovation Limited, Oxford, Oxfordshire OX2 0JB (GB)
(72) Inventor: HUANG, Wei, Oxford Oxfordshire OX2 0JB (GB); SONG, Yizhi, Oxford Oxfordshire OX2 0JB (GB); LI, Bei, Oxford Oxfordshire OX2 0JB (GB); BOOTH, Martin, Oxford Oxfordshire OX2 0JB (GB); THOMPSON, Ian, Oxford Oxfordshire OX2 0JB (GB)
(74) Representative: Dehns
(86) International application number: PCT/GB2017/050472
(87) International publication number: WO 2017/144886

(56) References cited:
- US-A- 5 998 129
- US-A1- 2002 122 898
- US-A1- 2006 121 298
- US-A1- 2006 154 281
- US-A1- 2008 063 572
- DATABASE WPI Week 201421 Thomson Scientific, London, GB; AN 2014-A14843 XP002770110, -& CN 103 353 452 A (BEIJING WEIXINYU BIOTECHNOLOGY) 16 October 2013 (2013-10-16)
- YUN WANG ET AL: "Raman Activated Cell Ejection for Isolation of Single Cells", ANALYTICAL CHEMISTRY, vol. 85, no. 22, 19 November 2013 (2013-11-19), pages 10697-10701, XP055370214, US ISSN: 0003-2700, DOI: 10.1021/ac403107p

## Description

Single cell biology is an emerging field of biology which offers new opportunities for understanding the cell, the fundamental building block of life. Typical biochemical and physiological methods are performed on groups of cells and therefore provide information which is averaged over the collection of cells. Such methods therefore risk missing vital information on detailed physiology of individual cells, cell-cell interactions, and heterogeneity within the cell population. Microbiologists are particularly interested in single cells, as the vast majority of microorganisms in nature cannot at present be cultured successfully. Even for those cells which can be cultured it is still advantageous to study these in their normal biological context. Hence, it is desirable to develop new and improved methods for the study of single cells.

The identification and isolation of single cells having interesting properties is often achieved using techniques based on Fluorescence-Activated Cell Sorting (FACS). However in FACS techniques, cells must be suspended in a solution and pass through a small nozzle one by one to be sorted according to cell fluorescence. FACS has two major limitations, however: firstly, it requires that the cell suspension is free of large particles or debris which would otherwise block the cell sorting nozzle. This means that FACS cannot be used to analyse soil samples or complex tissue samples, for instance. Secondly, FACS requires the cells to be suspended in a homogenous solution, which loses any structural or spatial information and so prevents any understanding of interactions which may exist between individual cells (e.g. cell-cell, bacteria-tissue, or cell-substrate interactions).

Single-cell Raman spectroscopy (SCRS) is a method which has attracted significant interest recently. Raman spectroscopy provides a chemical "fingerprint" which is a characteristic of the biochemical composition of the cell, for example its nucleic acid, protein, carbohydrate and/or lipid composition. Many, if not all, complex organic molecules have at least one Raman-active mode and therefore Raman spectra can be obtained based on the biomolecules in living cells in their natural state without needing to introduce a labelling compound. This allows rapid and reliable detection of individual cells having particular characteristics. For example, SCRS can be employed to investigate cellular compositions, to identify particular phenotypes (e.g. bacterial strains), or even to identify physiological states by monitoring changes in concentrations and distributions of cellular components. Cells which have been isotopically labelled (e.g. with ¹³C or ¹⁵N) can be employed to investigate metabolic pathways due to small but detectable shifts in Raman spectral lines which occur when such isotopic labels are incorporated into biomolecules.

In order to further the study of single cell biology, methods are needed not only for identifying cells of interest but also for isolating these, for example so that cells with interesting properties can be cultured for further study or so that single cell "-omics" analyses can be carried out, such as genomics (e.g. genomic sequencing), transcriptomics, proteomics and metabolomics. Much work in this field has recently focused therefore on techniques for sorting of cells after characterisation by Raman spectroscopy, known generally as "RACS" (Raman Activated Cell Sorting). The most prevalent RACS techniques described so far in the literature employ microfluidic techniques or optical tweezers to sort cells following Raman characterisation. However, such techniques have a number of drawbacks. Microfluidic cell sorting and optical tweezers require the cell to be suspended in liquid, which prevents the application of these techniques to cells in tissue samples, solid particles, biofilms, etc. Furthermore, microfluidics-based cell manipulation techniques require intricate microfluidic chips which are prone to contamination or blockage, and have relatively low throughput. Optical trapping of cells with optical tweezers is a slow and delicate operation which limits throughput and, moreover, the prolonged exposure to intense laser radiation which is required can lead to cell damage. Furthermore, Raman spectral lines are naturally very weak and therefore long acquisition times are needed to acquire the Raman spectrum before cell sorting can take place, further limiting the potential throughput of RACS techniques.

Patent document CN103353452A discloses the preamble of claim 1.

The present inventors have now surprisingly found that Raman Activated Cell Ejection (RACE) techniques as herein described offer a route for fast, non-invasive identification of cells of interest, high throughput, and non-invasive, non-harmful, high-quality and accurate isolation of the identified cells.

In particular, the use of a screening chip as described herein has been found to offer particular advantages in allowing the integration of cell probing via Raman spectroscopy and cell sorting using laser induced forward transfer (LIFT) in order to provide an efficient and effective RACE technique.

In one aspect the present invention therefore provides a screening chip for cell sorting, as claimed in claim 1.

The screening chip acts as a carrier for samples to be studied by means of the spectroscopic and/or cell-sorting methods and techniques described herein. In this respect the screening chip may be viewed as analogous to a microscope slide, i.e. as a mount for samples under investigation.

In a preferred embodiment both the first surface and the second surface of the substrate are substantially planar (e.g. planar). In such an embodiment the first and second surfaces of the substrate may be substantially parallel (e.g. parallel) to one another, such that the separation between the first surface and the second surface of the substrate is substantially constant at any point on the chip.

In a preferred embodiment, the chip further comprises a cell-holding layer. The cell-holding layer is located adjacent to the Raman-inactive coating material such that the Raman-inactive coating material is situated between the cell-holding layer and the substrate. The cell-holding layer has at least one well suitable for confining a cell sample. A portion of the Raman-inactive coating material is exposed at the bottom of the well so that the cell sample contacts the Raman-inactive coating material. Preferably the cell-holding layer comprises a plurality of such wells. The wells may therefore be regarded as holes in the cell-holding layer, which, in use, enable the cell-holding layer to confine (hold) at least one cell sample whose volume is less than the volume of the well.

The cell-holding layer is preferably made from a material which is inert, i.e. a material which is non-toxic to cells and which does not dissolve in or react with aqueous solvents such as buffer solutions at typical biological/physiological pH ranges. The cell-holding layer may suitably be a polymeric layer such as a polydimethylsiloxane (PDMS) layer.

The cell sample comprises at least one biological cell (such as a unicellular organism, e.g. a bacterium) and may comprise a plurality of cells (e.g. two or more cells of a unicellular organism, a plurality of different unicellular organisms, a multicellular organism, or a tissue sample). The cell sample may if desired be provided as a suspension of one or more cells in a suitable liquid medium such as water or an aqueous buffer solution. Particularly preferably, the cell sample comprises at least one living cell.

In another embodiment the well or wells are formed directly in the substrate so that the substrate itself is capable of confining at least one cell sample. In such embodiments it is preferred that the first surface is substantially planar (e.g. planar) in regions between the wells and that the second surface is substantially planar (e.g. planar). Preferably the planar regions of the first surface are substantially parallel (e.g. parallel) to the second surface. In such embodiments the wells therefore take the form of regions in which the separation between the first and second surfaces of the substrate is noticeably reduced (i.e. in which the separation between the first and second surfaces varies by more than any naturally-occurring variation in the planarity of either surface due to manufacturing tolerances or other unavoidable imperfections). In any such embodiment, reference to the overall thickness of the chip should be understood as referring to the widest separation between the first and second surfaces. In such embodiments wells may therefore be regarded as localised depressions in the first surface of the substrate of the chip which may, in use, act to confine a sample whose volume is less than the volume of the well.

Where wells are present in the cell-holding layer or in the substrate, these may have any shape provided that this is suitable for localised confinement of a sample. In certain embodiments, when viewed along an axis parallel to a plane defined by the first and second surfaces of the substrate a well may have a substantially square, rectangular, hemispherical, parabolic, centrally-truncated parabolic (i.e. substantially parabolic walls joined by a flat bottom section), peripherally-truncated paraboloid (i.e. substantially parallel walls joined by a parabolic bottom section), triangular, or trapezoidal cross-section. In certain embodiments, when viewed along an axis perpendicular to a plane defined by the first and second surfaces of the substrate a well may have a substantially circular, ovoid, octagonal, heptagonal, hexagonal, pentagonal, quadrilateral (e.g. rectangular, square, or rhomboid), or triangular cross-section. Any geometrically-permissible combination of such cross-sections in a plane defined by the first and second surfaces of the substrate and a plane normal thereto may be contemplated. Where a plurality of wells are present, all wells may be substantially identical (e.g. identical) in shape to one another or a plurality of differently-shaped wells may be present. Where a plurality of wells are present, wells may be positioned in the cell-holding layer or the substrate in a regular, repeating pattern or they may be randomly positioned with respect to one another. Preferably, all wells are substantially identical (e.g. identical) in shape. Preferably, wells are positioned in a regular, repeating pattern relative to one another. Particularly preferably, wells are positioned in a regular, repeating pattern relative to one another and are substantially identical (e.g. identical) in shape. Preferably, where a plurality of wells are present, they are substantially identical (e.g. identical) in volume.

The presence of wells may be particularly desirable when the sample to be studied comprises a collection of individual, unconnected cells (e.g. a collection of unicellular organisms, such as bacteria). However, wells may also be employed for the study of multicellular organisms or tissue samples provided that such organisms or samples can be accommodated in the wells.

In certain embodiments, the screening chip may be devoid of wells or may comprise only a single well. Such embodiments may be particularly desirable when the sample to be studied is a large multicellular organism or a tissue sample. However, samples comprising individual, unconnected cells (e.g. unicellular organisms, such as bacteria) may also be studied using screening chips which are devoid of wells or comprise only a single well.

The well or wells preferably have a volume of at least 0.2 µl, as the handling of liquid samples becomes difficult below this volume. Preferably the well or well(s) each have a volume of at least 0.2 to 0.5 µl. In certain embodiments the well or wells preferably have a volume of at least about 1 µl, e.g. 2 µl. In certain embodiments the well or wells preferably have a volume of about 10 µl or less. Wells may suitably have a dimension of about 0.5 to about 3 mm (e.g. about 1 mm, about 1.5 mm or about 2 mm) in a plane parallel to the substrate, for example a length of a side or a diameter. Wells may suitably have a depth of about 0.1 to about 1 mm (e.g. about 0.5 mm). A preferred well is a well having a circular cross-section when viewed along an axis perpendicular to a plane defined by the first and second surfaces of the substrate and a rectangular cross-section when viewed along an axis parallel to a plane defined by the first and second surfaces of the substrate, wherein the diameter of said circular cross-section is about 1 mm and said rectangular cross-section has a depth of about 0.5 mm.

At least a portion of the first surface of the substrate is coated with a Raman-inactive coating material which can be vaporised by laser irradiation at a wavelength λ₁.

Raman scattering of electromagnetic radiation is the name given to inelastic scattering of photons. Typically this occurs for about 1 in every 10 million photons which interact with a molecule having a Raman-active mode. Inelastic scattering leads to a change in the energy (and thus the frequency) of a scattered photon, which may therefore either be higher in energy (and higher in frequency, thus shorter in wavelength) than the originally-incident photon - this is referred to as anti-Stokes Raman scattering - or lower in energy (and lower in frequency, thus greater in wavelength) than the originally-incident photon - this is referred to as Stokes Raman scattering. Raman scattering of electromagnetic radiation typically occurs as a result of interaction between a photon and the rotational, vibrational and/or rovibrational modes of a molecule. Some rotational/vibrational/rovibrational modes cannot interact with photons in a manner capable of giving rise to Raman scattering and these modes are referred to as Raman-inactive modes. Rotational, vibrational or rovibrational modes capable of interacting with photons in a manner which is capable of giving rise to Raman scattering may be referred to as Raman-active modes.

As used herein, a Raman-inactive coating material may be a material which comprises, or preferably consists essentially of, elements and/or compounds which have no Raman-active modes. For example, the majority of elements which exist in a monatomic or metallic state are Raman-inactive and therefore a Raman-inactive coating material may comprise or consist essentially of such elements. An example of a preferred Raman-inactive element suitable for use in the Raman-inactive coating material is aluminium (Al).

A Raman-inactive coating material may comprise elements and/or compounds having Raman-active modes, but only to the extent that any Raman scattering arising from the presence of such elements and/or compounds is negligible in comparison to the Raman scattering arising from any Raman-active sample which may be present.

The Raman-inactive coating material is a composite comprising a Raman-inactive layer and a Raman-active layer. The Raman-active layer is in contact with the substrate such that the Raman-inactive layer is separated from the substrate by the Raman-active layer. This ensures that, when the chip is in use, any cell sample which is provided (e.g. in a well in the substrate or in a well in the cell-holding layer) contacts the Raman-inactive layer and not the Raman-active layer. For example, the Raman-inactive coating material may comprise a polymeric layer in contact with the substrate and a metallic layer in contact with the polymeric layer. An example of such an embodiment comprises a polyethylene naphthalate (PEN) layer or a polyethylene terephthalate layer in contact with the first surface of the substrate and an aluminium layer in contact with the PEN or polyethylene terephthalate layer. Other Raman-inactive metals as described herein may be used in place of aluminium, for example Au, Ti, Ag, Cu, Ni, Pt, Pd, Rh, mixtures thereof, oxides thereof, mixtures of the oxides thereof and/or mixtures of the metals and oxides. The polymeric layer (e.g. PEN or polyethylene terephthalate) may have any thickness provided that it is transparent to radiation of wavelength λ₁ and does not impede vaporisation of the metal (e.g. Al) layer. For example, a polymeric (e.g. PEN) layer having a thickness of about 5 nm to about 10 mm may be employed. In certain embodiments the thickness may be about 50 to about 100 nm, e.g. about 75 nm. The thickness of the metal or metal oxide layer may be any suitable thickness as herein described provided that it is capable of being vaporised when irradiated with the irradiation of wavelength λ₁, for example the thickness may be in a range of about 5 nm to about 50 nm, e.g. 25 nm.

Preferably the Raman-inactive coating material provides a signal-to-noise ratio of less than 5 when in use.

Examples of Raman-inactive coating materials suitable for use in the screening chips of the present invention include metals and metal oxides, particularly aluminium, titanium, gold, silver, nickel, copper, platinum, palladium, and rhodium, mixtures thereof, the oxides thereof, mixtures of the oxides thereof, and/or mixtures of such metals and metal oxides. Of these metals, copper and silver are preferably avoided due to their potential cytotoxic effects. Aluminium has been found to be particularly suitable. Other suitable materials may include graphite, graphene or polymers such as polyethylene naphthalate (PEN), polyethylene terephthalate and/or polyester. Many polymers have Raman-active modes and therefore if a Raman-active polymer is used as a coating material this should itself be coated with a Raman-inactive material such as one of the aforementioned metals so that the Raman-inactive coating material is a composite material comprising a polymer layer in contact with the first surface of the substrate and a second layer in contact with the polymer layer at a side distal from the point of contact between the polymer layer and the first surface of the substrate, wherein said second layer is Raman-inactive. Such Raman-active polymers may be used if they are readily vaporisable with laser irradiation as described herein, but it is important to ensure that their Raman activity does not interfere with the acquisition of Raman spectra from cell samples.

The Raman scattering methods and apparatus described herein therefore differ from many methods previously employed in an effort to improve cell sorting techniques, which have relied on surface-enhanced Raman scattering. Surface-enhanced Raman scattering relies upon poorly-understood interactions between a substrate and a sample adsorbed, absorbed or otherwise in contact with the substrate, which lead to an increase in the intensity of Raman scattering of light from the sample. While such techniques can lead to dramatic increases in the intensity of Raman scattering, and thus lead to good improvements in the signal-to-noise ratio of any Raman spectra obtained, they often require relatively thick layers of coating materials to be present. Although the presence of thick layers is advantageous for enhancement of the Raman signal, and therefore makes the identification of cells of interest easier, it has the drawback that such layers are typically not readily vaporisable and therefore are of limited applicability in cell ejection techniques.

In addition to being Raman-inactive, the coating layer in the screening chips of the present invention should be readily vaporisable by laser irradiation. In particular, it is desirable that the coating layer should be vaporisable by pulsed laser irradiation with each pulse having a duration of between 1 ns and 1 s, e.g. 0.1 s to 1 s. Typically the pulse duration is no more than 500 ms, preferably 100 ms or less, e.g. 50 ms or less, 1 ms or less, 1 µs or less, 500 ns or less, 100 ns or less, or 10 ns or less, e.g. 1 to 10 ns. It is also desirable that the coating layer should be vaporisable by pulsed laser irradiation with each pulse having an energy density of 10 mJ/cm² or less, e.g. 3.5 mJ/cm² or less. It is also desirable that the coating layer should be vaporisable by pulsed laser irradiation with each pulse having a total energy of between 100 pJ and 3 µJ. Laser pulse durations, energy densities and pulse energies as described herein are preferable in order to minimise the risk of damage or destruction of cell samples located on the coating layer.

In principle any laser wavelength λ₁ can be used for vaporisation of the coating layer provided that sufficient energy is transferred from the laser to the coating layer to cause vaporisation. For example, any wavelength from 200 nm to 1600 nm (e.g. 350 to 1400 nm, such as 200 to 1200 nm, for example 350 to 900 nm, 400 to 600 nm, 500 to 1100 nm, or 700 to 1100 nm, etc.) may be employed. Irradiation at 532 nm or 1064 nm is particularly preferred, since these wavelengths have been found to minimise any damage inflicted on cells located on the coating layer.

The coating layer should be of a suitable thickness to absorb laser irradiation such that the irradiated area of the coating layer vaporises completely, thereby creating thermal shockwaves which cause ejection of any sample located thereon with the trajectory of ejection being in a direction away from (e.g. substantially normal to) the first surface of the substrate. A layer which is too thin may evaporate before absorbing all of the laser energy impinging thereupon, which may risk damage to any cell samples from excess laser energy. A layer which is too thick may not evaporate completely or at all, leading to negligible sample ejection, or ejection at a velocity insufficient to enable effective capture of ejected cells. The use of layers which are too thick may also lead to a loss of cell integrity (e.g. cell wall rupture), for example due to excessive heating and therefore the layer thickness should be selected so as to allow the integrity of cells to be maintained during ejection. Appropriate layer thicknesses will depend not only upon the wavelength, power and duration of any laser irradiation, but also upon the nature of the coating layer. It is therefore difficult to prescribe any particular limitations on the thickness of the coating layer. The skilled person will be able to select appropriate layer thicknesses having regard to the nature of the coating material, the wavelength, power and duration of any laser irradiation employed, the nature of the sample to be ejected and the desired velocity and distance which may need to be attained by any ejected sample. However, typically the coating layer will have a thickness of not more than 100 nm, e.g. 80 nm or less, 60 nm or less, 50 nm or less, 40 nm or less, 30 nm or less, 20 nm or less, or 15 nm or less. Preferably the coating is no thinner than 10 nm. Thus in an embodiment the coating layer may have a thickness of 10 to 100 nm, such as 20 nm to 90 nm, 30 nm to 80 nm, 40 nm to 70 nm or 50 nm to 60 nm. A preferred coating layer is aluminium having a thickness of no less than 15 nm and no more than 35 nm, preferably about 25 nm. Such a layer may suitably be vaporised using a 532 nm laser pulse of up to about 0.1 s in duration and up to about 3.5 mJ/cm² in energy density.

The substrate of the screening chip should be transparent to laser radiation at wavelength λ₁. "Transparent" in this context means that the substrate is capable of transmitting sufficient radiation of wavelength λ₁ that the transmitted radiation is capable of vaporising the Raman-inactive coating material to cause cell ejection, i.e. that the substrate does not attenuate the laser beam to such an extent as to prevent cell ejection from taking place. Preferably the substrate should have an optical density of 0.1 or less with respect to radiation at wavelength λ₁. As the wavelength λ₁ will vary depending on the nature of the coating material, the nature of any sample to be ejected, the desired ejection velocity and distance, etc., it is difficult to be prescriptive with regard to the substrate material. The skilled person will be able to choose suitable substrate materials according to need. However, typical substrate materials which show acceptable levels of transparency across a range of wavelengths include glass (e.g. quartz glass) or transparent polymeric materials.

Upon irradiation with laser energy of the appropriate wavelength, power and duration, the coating material in the region of illumination will vaporise, propelling any sample (e.g. cells) located thereupon in a direction away from the first surface of the substrate due to thermal shockwaves and/or expansion of the gases generated upon vaporisation. This is referred to as ejection. In this way, ejection of the sample allows the ejected sample to be isolated from its original environment. Thus, for example, if the original sample comprises a cell population comprising some cells having a particular feature of interest (for instance, cells expressing a particular biomolecule, or a particular phenotype of bacteria) and other cells devoid of that feature, cell ejection can be performed in order to selectively eject the cells (preferably live cells) having the feature of interest.

In order to facilitate further study of the ejected sample, it is desirable that the ejected sample is collected. Thus, in an embodiment a collection chip is provided which is configured to capture cells ejected from the screening chip. The collection chip may comprise a substrate having a substantially planar first surface positioned in a spaced relationship relative to the first surface of the screening chip substrate, such that cells ejected from the screening chip in a direction of travel away from the first surface of the substrate of said screening chip impinge upon the substantially planar first surface of the collection chip. Alternatively the collection chip may comprise a substrate having a substantially planar first surface interrupted by wells (also called sample collection wells). Such wells may be similar to the wells as hereinbefore described in connection with the screening chip and therefore the foregoing discussion of desirable cross-sectional shapes in relation to wells in the screening chip applies equally to the shapes of any wells in the collection chip.

In certain embodiments, at least a portion of the collection chip (for example, at least a portion of the substantially planar first surface, or at least a portion of the bottom of at least one sample collection well) may be coated with a material which promotes adhesion of any ejected cells which encounter the collection chip.

In an embodiment, the collection chip comprises a substantially planar substrate having first and second surfaces, and further comprises a cell-holding layer in contact with the first surface. The cell-holding layer has at least one well suitable for confining a cell sample. The wells may therefore be regarded as holes in the cell-holding layer, which, in use, enable the cell-holding layer to confine (hold) at least one cell sample whose volume is less than the volume of the well.

The cell-holding layer of the collection chip is preferably made from a material which is inert, i.e. a material which is non-toxic to cells and which does not dissolve in or react with aqueous solvents such as buffer solutions at typical biological/physiological pH ranges. The cell-holding layer may suitably be a polymeric layer such as a polydimethylsiloxane (PDMS) layer.

In use, the well or wells of the collection chip (where a well or wells are present) should be oriented such that the open ends of the well(s) are directed towards the screening chip, so that cells ejected from the screening chip in a direction towards the collection chip may travel into the well(s) of the collection chip. This may be achieved by positioning the collection chip such that the first surface of the substrate of the collection chip is oriented towards the first surface of the substrate of the screening chip. In the case where both the screening chip and the collection chip comprise at least a well or a plurality of wells, it is desirable that the wells of the screening chip and the wells of the collection chip are aligned with one another (e.g. in a coaxial or collinear manner) so that the probability is maximised of a cell ejected from a well in the screening chip travelling into a complementary well of the collection chip. In such embodiments it is preferable that the wells of the collection chip are greater in volume than the wells of the screening chip and/or greater in cross-sectional area than the wells of the screening chip when viewed along an axis normal to the plane defined by the collection chip, in order to account for the fact that cells may be ejected from the screening chip across a range of trajectories. For example, the wells of the collection chip may suitably have a dimension in the plane of the collection chip which is up to about 4 times (e.g. about 3.5, about 3 or about 2 times) the corresponding dimension of the well of the screening chip. The wells of the collection chip may also suitably have a depth of up to about 8 times (e.g. about 7 times, about 6 times, about 5 times, or about 4 times) the depth of the wells of the screening chip. In some embodiments the wells of the collection chip may have a first portion having a first dimension in the plane of the collection chip and a second portion having a second dimension in the plane of the collection chip, wherein said second dimension is smaller than said first dimension and the depth of said second portion is less than the depth of said first portion. In use, such wells are oriented so that cells ejected from the screening chip in a direction of travel towards the collection chip will encounter the first portion of the well of the collection chip before encountering the second portion of the collection chip well. In one embodiment the collection chip has wells having a first portion with a circular cross-section in the plane of the collection chip which is about 3.5 mm in diameter and a second portion having a circular cross-section in the plane of the collection chip which is about 2 mm in diameter, wherein the first portion has a depth of about 3 mm and the second portion has a depth of about 0.5 mm.

When both the collection chip and the screening chip possess wells, the collection chip and the screening chip may be located in a spaced relationship to one another. In certain embodiments the collection chip and the screening chip may be in a spaced relationship to one another and connected by walls such that the collection chip, screening chip and walls together define an enclosed space. In one embodiment the screening chip comprises a cell-holding layer and the collection chip also comprises a cell-holding layer, and the cell-holding layer of the screening chip contacts the cell-holding layer of the collection chip such that the well(s) of the screening chip and the well(s) of the collection chip are aligned.

Alternatively the collection chip and the screening chip may be arranged so that planar portions of the screening and collection chips are in direct contact with one another and the wells of the collection chip directly overlay the wells of the screening chip.

When the screening chip comprises a well or a plurality of wells, the well or wells preferably have a volume of at least 0.2 µl, as the handling of liquid samples becomes difficult below this volume. Preferably the well or wells each have a volume of at least 0.2 to 0.5 µl. In certain embodiments the well or wells preferably have a volume of at least about 1 µl, e.g. 2 µl. In certain embodiments the well or wells preferably have a volume of about 10 µl or less, e.g. about 6 µl or less, for instance 0.2 to 6 µl or 0.5 to 6 µl. Wells may suitably have a dimension of about 0.5 to about 3 mm (e.g. about 1 mm, about 1.5 mm or about 2 mm) in the plane of the collection chip, for example a length which is a length of a side or a diameter. Wells may suitably have a total depth of about 0.1 to about 5 mm (e.g. about 0.5 to about 3.5 mm). Where the well(s) comprise a first portion and a second portion the total depth of the well is the cumulative depth of the first and second portions.

A maximum well volume of about 10 µl in the collection chip is particularly preferable if the ejected cell(s) collected by the collection chip are intended to be used for DNA amplification. If the collected cell(s) are intended to be used for cell culture, in principle there is no upper limit on well volume although preferably the well(s) will have dimensions as herein described for ease of manufacture. In any case, suitable well dimensions and volume will depend *inter alia* on the nature of the cell sample being studied and on the density and size of the cells of interest in the cell sample. Ideally the well(s) of the collection chip should be capable of collecting between 10³ and 10⁵ cells per well and therefore the dimensions and volume of any well(s) present will vary depending on the nature of the cells being studied. The skilled person will be able to select appropriate well sizes and volumes according to the cells under consideration.

In principle any type of biological cell may be studied using the methods, chips and apparatus of the present invention. Examples of cells which may suitably be studied using the methods, chips, and apparatus of the present invention include, but are not limited to, any eukaryotic or prokaryotic cells including insect, plant, mammalian (e.g. human) and microbial (e.g. algal or bacterial, including Gram-positive and Gram-negative bacteria) cells, for example cells of yeast, red blood cells (erythrocytes, e.g. human erythrocytes), white blood cells (leukocytes, for example human leukocytes), stem cells, cancer cells, bacteria such as soil bacteria and/or photosynthetic bacteria; *Rhizobium* spp.; *Bacillus subtilis, Pseudomonas* spp., *Acinetobacter* spp.; *Cyanobacteria* spp; *Nannochloropsis* sp. *Prochlorococcus* spp., *Gloeobacter* spp., *Rhodobacter* spp., *Pelomonas* spp., *Bradyrhizobium* spp., *Halomonas* spp., *Shigella* spp.; and human pathogenic bacteria (e.g. *Staphylococcus aureus, Staphylococcus saprophyticus, Enterococcus faecalis, Escherichia coli, Bacillus* spp., *Staphylococcus epidermidis, Staphylococcus cohnii, Enterococcus faecium, Klebsiella pneumoniae,* and/or *Pseudomonas aeruginosa*),

In certain embodiments, the well(s) of the collection chip may contain a liquid medium to promote adhesion of the collected cells. The nature of the liquid medium will vary depending on the nature of the cells under consideration and any intended further study (e.g. cell culture or DNA amplification). For example, for DNA amplification studies, the collection chip may suitably contain water, a cell lysis buffer solution, or an aqueous Tris-EDTA buffer solution. For cell culture studies, the collection chip may suitably contain water, PBS buffer solutions or nutrient solutions. Other suitable solutions are within the common general knowledge of the skilled person having regard to normal principles of cell biology.

In a further aspect the present invention therefore provides a cell sorting method, as claimed in claim 5.

The screening chip comprises a plurality of cells. The cells may be directly adhered to the screening chip or may be provided in a liquid medium on a surface of the screening chip and/or in a well or wells of the screening chip, e.g. suspended in an aqueous medium such as a buffer solution. At least one cell should be located adjacent to the Raman-inactive coating material. "Adjacent to", in this context, may imply that the at least one cell is in direct contact with (e.g. adherent to) the coating material or may also imply indirect contact, for example if the at least one cell is suspended in a liquid medium and the liquid medium is itself in contact with the coating material. It is, however, important that the at least one cell should be situated such that vaporisation of the coating material in the target region is capable of causing ejection of the at least one cell from the screening chip.

The cell which is ejected from the screening chip is collected by a collection chip which is a collection chip as herein described.

The laser radiation of wavelength λ₂ may be any appropriate wavelength which promotes detectable Raman scattering from Raman-active modes in biomolecules in the cells of interest. The precise wavelength chosen will vary depending on the nature of the cells under investigation and the nature of the biomolecule(s) which the cell sorting intends to employ to discriminate between cells. However, typical examples of wavelengths suitable for use as λ₂ include, but are not limited to:
Ultraviolet radiation in the range of about 230 nm to about 390 nm, e.g. 244 nm, 257 nm, 325 nm, 364 nm
Visible radiation in the range of about 400 nm to about 700 nm, e.g. 457 nm, 473 nm, 488 nm, 514 nm, 532 nm, 633 nm, 660 nm
"Near infra-red" radiation in the range of about 750 nm to about 1200 nm, e.g. 785 nm, 830 nm, 980 nm, 1064 nm.

The chosen wavelength λ₂ will depend not only on the nature of the cells and biomolecule(s) under investigation but also the desired level of sensitivity (Raman scattering intensity is proportional to λ₂⁻⁴) and the desired spatial resolution (shorter wavelengths having better diffraction-limited spatial resolution).

In an embodiment the wavelength λ₂ is different to (i.e. longer than or shorter than) the wavelength λ₁.

In an embodiment the wavelength λ₂ is the same as the wavelength λ₁

Where laser radiation of wavelength λ₂ may in principle be capable of causing vaporisation of the coating material on the screening chip (for example when λ₂ = λ₁), it is important to ensure that the duration and/or energy density of any irradiation at wavelength λ₂ is insufficient to cause such vaporisation, i.e. the coating is substantially intact following irradiation at wavelength λ₂ as described herein.

Preferably irradiation at λ₂ is continuous-wave irradiation and irradiation at λ₁ is by means of pulsed irradiation.

Irradiation at λ₂ should last for a duration which is sufficient to allow acquisition of Raman scattered light from the irradiated cells.

Irradiation at λ₂ may be performed in any suitable pattern, for example by irradiating discrete points (e.g. individual cells or individual wells) on the screening chip in sequence, by scanning a laser point continuously across the screening chip, by scanning a laser line across the screening chip to irradiate multiple cells and/or wells simultaneously, or by irradiating an entire surface of the screening chip simultaneously.

Where irradiation at λ₂ takes place in discrete steps (e.g. by irradiation at discrete points in sequence) or by continuous scanning (e.g. of a laser point or a laser line) this may be performed by moving the screening chip relative to the source of the laser radiation and/or by moving the source of the laser radiation relative to the screening chip.

Detection of Raman scattering from the irradiated cells may be performed using any conventional Raman scattering detection means.

In some embodiments it may be desirable to detect Raman scattering arising from irradiation with laser radiation of more than one wavelength λ₂ in order to improve detection accuracy, for example by detecting more than one Raman-active mode.

In order to perform the function of cell sorting, the Raman scattering which is detected should be suitable for distinguishing cells having a characteristic of interest from cells devoid of that characteristic. Possible characteristics of interest are wide-ranging and include, but are not limited to, identifying particular species or phenotypes; identifying particular physiological states; or identifying the presence of particular biomolecules. In the case where Raman scattering is employed to distinguish between species, phenotypes, or physiological states, this may be done by detection of the presence or absence of a Raman scattering profile whose presence or absence is characteristic for that particular species, phenotype or physiological state, or whose intensity varies in such a way as to enable characterisation of said species, phenotype or physiological state. As the Raman signature of any cell is characteristic of its biochemical composition, it is therefore possible to distinguish between phenotypes, species, or physiological states based upon the presence, absence, or intensity of Raman scattering profiles which are characteristic of molecules which act as biomarkers for such phenotypes, species, or physiological states.

The Raman scattering which is detected in the cell sorting methods of the invention may arise from any of a wide range of biomolecules, including, but not limited to, amino acids (e.g. phenylalanine), nucleotides (e.g. guanine), polycyclic aromatic compounds (e.g. naphthalene), glucose, cellulose, steroidal compounds, ergosterol, cytochrome C, thymine, carotenoids, opsins (e.g. rhodopsin or proteorhodopsins), fatty acids, polyphosphate, glycogen, polyhydroxybutyrate (PHB), chlorophyll, calcium dipicolinate (CaDPA), polysulfide, cyclooctasulfur, starch, triacylglycerol (TAG) or adenine. Cytochrome c is abundant in the mitochondria of eukaryotic cells and possesses a few strong and unique Raman spectra at 747, 1128, 1311 and 1583 cm⁻¹ if excited by a 532-nm laser due to Raman resonance (RR) scattering. Furthermore, carotenoids of photosynthetic bacteria also show three very strong and characteristic bands due to RR at a 532 nm excitation wavelength. The *v1* band is the methyl rocking mode, and the *v2* and *v3* bands vary due to the different lengths of conjugated C=C bonds and stretching modes of C-C bonds.

A range of typical Raman active bands which may be observed in microbial cells upon excitement at 532 nm are listed in Table 1. If combined with stable isotope probing (SIP), the shifts observed in such bands can be employed to reveal information about the physiology and metabolism of such cells. The shifts observed in such Raman bands upon incorporation of particular isotopes are therefore also given in Table 1.

**Table 1**

| Raman bands of unlabeled cells (cm⁻¹) | Isotope | The extent of Raman shift (cm⁻¹) | Assignment |
|---|---|---|---|
| 729 | ¹⁵N | -14 | Adenine ring breathing |
| 787 | ¹³C | -17 | O- P- O breathing, Cytosine, uracil |
| 787 | ¹⁵N | -3 | OP-O breathing, Cytosine, uracil |
| 1001-1003 | ²H | -42 | Symmetric ring breathing mode of phenylalanine |
| 1001-1003 | ¹³C | -37 | Symmetric ring breathing mode of phenylalanine |
| 1174 | ¹⁵N | -10 | C-H in-plane bending of tyrosine or phenylalanine |
| 1247 | ¹³C | -14 | Amide III |
| 1247 | ¹⁵N | -14 | Amide III |
| 1342 | ¹³C | -15 | CH stretching of adenine |
| 1342 | ¹⁵N | -19 | CH stretching of adenine |
| 1480 | ¹⁵N | -10 | Purine base of guanine and adenine |
| 1578 | ¹³C | -47 | Ring stretching of guanine and adenine |
| 1578 | ¹⁵N | -7 | Ring stretching of guanine and adenine |
| 1663 | ¹³C | -35 | C=C of unsaturated lipid, amide I |
| ∼2850 | ²H | -74 5 | CH stretching of lipid |
| 2800-3100 | ²H | -800 | CH stretching of lipid and protein |

Following the detection of Raman scattering, a target region is identified. The target region is a region on the first surface of the screening chip substrate which is coated with the vaporisable coating material and having at least one cell located adjacent thereto. The target region should be identified based upon the Raman signature of the cell or cells located thereon: at least one cell in the target region should be a cell having a Raman signature which signifies a characteristic of interest. By irradiating at least a portion of the vaporisable coating material in the target region with laser radiation of wavelength λ₁, coating material in the target region can be vaporised, thereby ejecting a cell or cells from the target region in a direction away from the screening chip and preferably towards a collection chip.

The target region is typically substantially circular in cross-section when viewed along an axis perpendicular to the plane of the screening chip and may have a diameter of about 1 to about 2 µm. However, the target region may if desired be smaller in cross-sectional area than any cell located thereupon or may if desired be larger in cross-sectional area than any cell or collection of cells located thereupon, provided that the coating material present in the target region is sufficient in amount to eject the cell(s) located thereupon away from the screening chip when the coating material in the target region is vaporised.

In embodiments where it is desired to isolate a multicellular organism or a selection (collection) of several adjacent cells from a tissue sample or cell culture, for example, the target region may be of a suitable size and shape to selectively isolate said multicellular organism or collection of cells from their surroundings. Beam-shaping techniques known to those skilled in the art may be employed to achieve isolation of the relevant sample, for example a shape-controllable focal spot array could be used to eject multiple cells. A ring-shaped laser beam may be employed to define a ring-shaped target region capable of isolating a plurality of cells, for example, or even to eject a single large cell. Examples of suitable beam shaping techniques include those described in Laser Beam Shaping Applications (Fred M. Dickey, Todd E. Lizotte, Scott C. Holswade, David L. Shealy CRC Press, 2005) and in Beam Shaping for Advanced Laser Materials Processing (Keiji Fuse, Laser Technik Journal 12, p19-22, 2015), the entire contents of which are incorporated herein by reference. In certain preferred embodiments adaptive beam-shaping techniques may be employed, e.g. adaptive beam-shaping through a microscope objective system, for example as described in *What spatial light modulators can do for optical microscopy* (C. Maurer et al., Laser and Photonics Reviews 5, p81-101, 2011), the entire contents of which are incorporated herein by reference.

The irradiation of the coating material in the target region with laser radiation of wavelength λ₁ should be selective, i.e. the laser radiation of λ₁ should not directly irradiate any portion of the coating material outside the target region. This minimises the probability of ejecting any cells from the screening chip which are not cells having a characteristic of interest.

More than one target region may be identified and subsequently irradiated at wavelength λ₁ to cause cell ejection. For example, if the screening chip has a plurality of wells, each well containing at least one cell, and the Raman scattering indicates that more than one such well contains at least one cell of interest, then a target region may be defined corresponding to each well containing a cell of interest. In this way multiple cells of interest may be ejected and collected.

In order to avoid direct irradiation of the cells with laser radiation of wavelength λ₁ (which may otherwise cause damage or destruction of the cells), irradiation of the screening chip with radiation of wavelength λ₁ must be performed such that the laser radiation of wavelength λ₁ impinges on the second surface of the screening chip substrate and is transmitted through the substrate from the second surface to the first surface, where it encounters the coating material. This not only ensures that cell ejection takes place in the correct direction but also avoids direct irradiation of the cells with radiation of wavelength λ₁ which may otherwise damage the cells.

Irradiation of the cells with laser radiation of wavelength λ₂ may in principle be performed with the radiation of wavelength λ₂ impinging on the cells from any direction, provided that Raman scattering is caused and that sufficient Raman-scattered light can be collected to enable the identification of a target region. Thus in one embodiment laser radiation of wavelength λ₂ may have a direction of travel such that the laser radiation of wavelength λ₂ directly encounters cells located on the coating material.

In an alternative embodiment laser radiation of wavelength λ₂ may have a direction of travel such that the laser radiation of wavelength λ₂ impinges on the second surface of the screening chip substrate and is transmitted through the substrate from the second surface to the first surface and subsequently through the coating material in order to encounter the cells. In this alternative embodiment it is therefore required that the screening chip substrate and the Raman-inactive coating material are transparent to laser radiation of wavelength λ₂. In this context "transparent" means that the substrate and the coating material do not attenuate the laser beam of wavelength λ₂ to an extent which hinders the irradiation of the cells or the detection of Raman scattering. Due to the constraints which this imposes upon the selection of materials for the substrate and coating material, such embodiments are less preferred unless λ₂ = λ₁.

Two basic variants (A) and (B) of the cell sorting method may thus be envisaged, depending on the direction of travel of the radiation of wavelengths λ₁ and λ₂ and the arrangement of laser light sources relative to the screening chip:
(A) A cell sorting method, comprising:
   (i) providing a screening chip, said screening chip comprising a substrate having opposing first and second surfaces, wherein at least a portion of said first surface is coated with a Raman-inactive coating material which can be vaporised by laser irradiation at wavelength λ₁ and wherein said substrate is transparent to laser irradiation at wavelength λ₁; wherein said screening chip further comprises a plurality of cells;
   (ii) irradiating said cells with laser radiation of wavelength λ₂ and detecting Raman scattering from the thus irradiated cells, wherein said laser radiation of wavelength λ₂ impinges on said cells without travelling through the substrate;
   (iii) identifying a target region based on said Raman scattering, wherein said target region is a region of said first surface coated with said coating material and having at least one cell located adjacent thereto;
   (iv) irradiating the screening chip with laser radiation of wavelength λ₁ such that said laser radiation of wavelength λ₁ impinges on the second surface of the substrate and is transmitted through the substrate from the second surface to the first surface to selectively irradiate the coating material in the target region, thereby vaporising at least a portion of the coating material in the target region, causing ejection of the at least one cell located adjacent thereto; and
   (v) collecting the at least one ejected cell on a collection chip;
      and
(B) A cell sorting method, comprising:
   (i) providing a screening chip, said screening chip comprising a substrate having opposing first and second surfaces, wherein at least a portion of said first surface is coated with a Raman-inactive coating material which can be vaporised by laser irradiation at wavelength λ₁ and wherein said substrate is transparent to laser irradiation at wavelength λ₁; wherein said screening chip further comprises a plurality of cells;
   (ii) irradiating said cells with laser radiation of wavelength λ₂ and detecting Raman scattering from the thus irradiated cells, wherein said laser radiation of wavelength λ₂ impinges on the second surface of the substrate and is transmitted through the substrate from the second surface to the first surface to selectively irradiate the coating material in the target region, thereby vaporising at least a portion of the coating material in the target region, causing ejection of the at least one cell located adjacent thereto;
   (iii) identifying a target region based on said Raman scattering, wherein said target region is a region of said first surface coated with said coating material and having at least one cell located adjacent thereto;
   (iv) irradiating the screening chip with laser radiation of wavelength λ₁ such that said laser radiation of wavelength λ₁ impinges on the second surface of the substrate and is transmitted through the substrate from the second surface to the first surface to selectively irradiate the coating material in the target region, thereby vaporising at least a portion of the coating material in the target region, causing ejection of the at least one cell located adjacent thereto; and
   (v) collecting the at least one ejected cell on a collection chip.

Variant (B) is less preferred as this requires the substrate to be transparent to radiation of both wavelength λ₁ and wavelength λ₂ and further requires the Raman-inactive coating to be sufficiently transparent to radiation of wavelength λ₂ to allow the generation and detection of Raman scattering. This can severely limit the choice of Raman-inactive coating materials and their thicknesses as well as reducing the intensity and quality of any Raman signal which may be detected.

Variant (A) is thus strongly preferred and this may itself be performed in two basic modes (A1) and (A2). In mode (A1) the screening chip defines an xy plane, the radiation of wavelength λ₁ impinges upon the screening chip from a location having a positive z-coordinate relative to the xy plane, and the radiation of wavelength λ₂ impinges upon the screening chip from a location having a negative z-coordinate relative to the xy plane. In mode (A2) the screening chip defines an xy plane, the radiation of wavelength λ₁ impinges upon the screening chip from a location having a positive z-coordinate relative to the xy plane and the radiation of wavelength λ₂ impinges upon the screening chip from a location having a positive z-coordinate relative to the xy plane.

Since the xy plane and positive and negative z coordinates are defined relative to one another, mode (A1) may equivalently be described with the radiation of wavelength λ₁ impinging upon the screening chip from a location having a negative z-coordinate relative to the xy plane, and the radiation of wavelength λ₂ impinging upon the screening chip from a location having a positive z-coordinate relative to the xy plane. Similarly, mode (A2) may equivalently be described with the radiation of wavelength λ₁ impinging upon the screening chip from a location having a negative z-coordinate relative to the xy plane and the radiation of wavelength λ₂ impinging upon the screening chip from a location having a negative z-coordinate relative to the xy plane. It is important, however, that in mode (A1) the radiation of wavelength λ₂ and the radiation of wavelength λ₁ impinge upon the screening chip from locations with z-coordinates having opposite signs whereas in mode (A2) the radiation of wavelength λ₂ and the radiation of wavelength λ₁ impinge upon the screening chip from locations with z-coordinates having the same sign.

The xy plane defined by the screening chip may be substantially parallel (e.g. parallel) to a floor or work surface, and therefore the positive and negative z-directions may respectively correspond substantially to (e.g. correspond to) "up" and "down", or to "down" and "up". However, this is not essential and the methods described herein may in principle be performed with the xy plane defined by the screening chip having any spatial orientation with respect to a floor, work surface or other "real world" reference point.

In mode (A2) the screening chip therefore needs to be inverted ("flipped") between steps (ii) and (iv) in order to ensure that the requirement for the radiation of wavelength λ₂ not to travel through the substrate and the requirement for the radiation of wavelength λ₁ to travel through the substrate can be reconciled with the fact that both the radiation of wavelength λ₁ and the radiation of wavelength λ₂ impinge upon the screening chip from the same direction along the z-axis. In mode (A1) the need to flip the screening chip is averted due to the fact that the radiation of wavelength λ₁ and the radiation of wavelength λ₂ impinge upon the screening chip from opposite directions along the z-axis.

Mode (A1) is preferred as it allows for easier automation of the cell sorting method due to requiring less manipulation of the screening chip. In mode (A2) the need for intervention to invert the screening chip may not only slow down the overall process but may also lead to the introduction of alignment errors which could hinder effective cell ejection. For example, following the identification of a target region, it may be more difficult to re-find that target region after the screening chip is flipped (and so to selectively irradiate the target region with laser radiation of wavelength λ₁) than if the screening chip is not flipped. If the screening chip has to be flipped this can, in some embodiments, also require the use of a thinner Raman-inactive coating layer (e.g. an AI layer of no more than 25 nm thickness) in order to be able to visually identify the target region after flipping. For these reasons mode (A2) is less preferred.

Following collection of the ejected cell or cells, the ejected cell(s) may be cultured and/or subjected to further study such as whole genome amplification and/or DNA sequencing according to methods known to the skilled person. Desirably, such methods may be performed on the collection chip in order to minimise any risk of cell degradation or contamination. If whole genome amplification and/or DNA sequencing is intended, the collection chip must be sterile and free of any DNA or RNA (other than DNA or RNA originating from the isolated cells) as well as being free of DNase or RNase.

In order for the ejected cell(s) to be collected on the collection chip, the collection chip must be present by the time step (iv) is performed. In some embodiments, step (ii) is performed with a collection chip *in situ.* In alternative embodiments, the collection chip is introduced between step (ii) and step (iv), i.e. after step (ii) but prior to step (iv), for example after step (ii) or after step (iii). In such embodiments, the cell sorting methods of the invention therefore further comprise a step (ii(a)) or a step (iii(a)) of introducing a collection chip.

In variant (A) of the method of the invention (including modes (A1) and (A2)), if step (ii) is performed with the collection chip already *in situ,* this means that the material of the collection chip substrate must be selected so that it is transparent to radiation of wavelength λ₂ in order to allow the radiation of wavelength λ₂ to be transmitted to the cells and for Raman scattering to be detected. Preferably, therefore, in variant (A) (including modes (A1) and (A2)) of the method of the invention, step (ii) is performed without the collection chip *in situ* and instead the collection chip is introduced prior to step (iv), i.e. as a step (ii(a)) or a step (iii(a)). This allows a wider choice of collection chip substrate materials and eliminates a possible source of interference with the detection of Raman scattering in step (ii) at the expense of potentially slowing down the overall process.

In Variant (A2), it is necessary to "flip" (invert) the screening chip in between steps (ii) and (iv), for example after step (ii) or after step (iii). If step (ii) is performed with the collection chip *in situ* then the collection chip must also be inverted together with the screening chip. If the collection chip is introduced in a step (ii(a)) or a step (iii(a)) this may be performed before or after inverting the screening chip, with the proviso that if step (ii(a)) or (iii(a)) is performed before inverting the screening chip, the collection chip must then be inverted together with the screening chip.

Variant (B) of the method of the invention may also be performed with the cell collection chip *in situ* in time for step (ii) or may be performed with introduction of the cell collection chip in a step (ii(a)) or a step (iii(a)). In Variant (B) of the method of the invention the radiation of wavelength λ₂ does not need to travel through the collection chip at any point and therefore Variant (B) can be performed with the cell collection chip *in situ* without requiring the collection chip substrate material to be transparent to radiation of wavelength λ₂.

In a further aspect the present invention therefore provides a cell sorting apparatus, as claimed in claim 12.

The irradiation unit for irradiating the screening chip with laser radiation of wavelength λ₂ comprises a laser source generating laser radiation of wavelength λ₂ and optionally at least one objective (e.g. a lens and/or mirror) for focusing, shaping and/or steering the laser beam from said laser source to have a desired size, shape and direction. The irradiation unit for irradiating the screening chip with laser radiation of wavelength λ₂ may conveniently also be referred to as "the λ₂ irradiation unit".

The irradiation unit for irradiating the screening chip with laser radiation of wavelength λ₁ comprises a laser source generating laser radiation of wavelength λ₁ and optionally at least one objective (e.g. a lens and/or mirror) for focusing, shaping and/or steering the laser beam from said laser source to have a desired size, shape and direction. The irradiation unit for irradiating the screening chip with laser radiation of wavelength λ₁ may conveniently also be referred to as "the λ₁ irradiation unit".

The detection unit for detecting Raman scattering from the sample may, for example, be a diffractive or dispersive spectrometer which may separate the scattered light into spectral components and detect the intensity of one or more spectral components depending on wavelength or frequency in order to identify a Raman spectral signature.

In an embodiment, the irradiation unit for irradiating the screening chip with laser radiation of wavelength λ₂ and the detection unit for detecting Raman scattering may be components of a conventional Raman microscope such as a confocal Raman microscope.

In an embodiment, the irradiation unit for irradiating the screening chip with laser radiation of wavelength λ₂ and the irradiation unit for irradiating the screening chip with laser radiation of wavelength λ₁ may be the same irradiation unit.

In an embodiment, the irradiation unit for irradiating the screening chip with laser radiation of wavelength λ₁ may be arranged such that the laser radiation of wavelength λ₁ impinges upon the screening chip from a location having a positive z-coordinate relative to an xy plane defined by the screening chip.

In an embodiment, the irradiation unit for irradiating the screening chip with laser radiation of wavelength λ₁ may be arranged such that the laser radiation of wavelength λ₁ impinges upon the screening chip from a location having a negative z-coordinate relative to an xy plane defined by the screening chip.

In an embodiment, the irradiation unit for irradiating the screening chip with laser radiation of wavelength λ₂ may be arranged such that the laser radiation of wavelength λ₂ impinges upon the screening chip from a location having a positive z-coordinate relative to an xy plane defined by the screening chip.

In an embodiment, the irradiation unit for irradiating the screening chip with laser radiation of wavelength λ₂ may be arranged such that the laser radiation of wavelength λ₂ impinges upon the screening chip from a location having a negative z-coordinate relative to an xy plane defined by the screening chip.

The arrangement of the irradiation units may therefore vary depending on whether the cell sorting apparatus is configured to perform Variant (A), mode (A1); Variant (A), mode (A2); or variant (B) of the cell sorting method of the invention.

Where the cell sorting apparatus is configured to perform Variant (A), mode (A1), the irradiation unit for irradiating the screening chip with laser radiation of wavelength λ₁ is arranged such that the laser radiation of wavelength λ₁ impinges upon the screening chip from a location having a negative z-coordinate relative to an xy plane defined by the screening chip and the irradiation unit for irradiating the screening chip with laser radiation of wavelength λ₂ is arranged such that the laser radiation of wavelength λ₂ impinges upon the screening chip from a location having a positive z-coordinate relative to an xy plane defined by the screening chip. Alternatively, the irradiation unit for irradiating the screening chip with laser radiation of wavelength λ₁ is arranged such that the laser radiation of wavelength λ₁ impinges upon the screening chip from a location having a positive z-coordinate relative to an xy plane defined by the screening chip and the irradiation unit for irradiating the screening chip with laser radiation of wavelength λ₂ is arranged such that the laser radiation of wavelength λ₂ impinges upon the screening chip from a location having a negative z-coordinate relative to an xy plane defined by the screening chip.

Where the cell sorting apparatus is configured to perform Variant (A), mode (A2), the irradiation unit for irradiating the screening chip with laser radiation of wavelength λ₁ is arranged such that the laser radiation of wavelength λ₁ impinges upon the screening chip from a location having a negative z-coordinate relative to an xy plane defined by the screening chip and the irradiation unit for irradiating the screening chip with laser radiation of wavelength λ₂ is arranged such that the laser radiation of wavelength λ₂ impinges upon the screening chip from a location having a negative z-coordinate relative to an xy plane defined by the screening chip. Alternatively, the irradiation unit for irradiating the screening chip with laser radiation of wavelength λ₁ is arranged such that the laser radiation of wavelength λ₁ impinges upon the screening chip from a location having a positive z-coordinate relative to an xy plane defined by the screening chip and the irradiation unit for irradiating the screening chip with laser radiation of wavelength λ₂ is arranged such that the laser radiation of wavelength λ₂ impinges upon the screening chip from a location having a positive z-coordinate relative to an xy plane defined by the screening chip.

Where the cell sorting apparatus is configured to perform Variant (B), the irradiation unit for irradiating the screening chip with laser radiation of wavelength λ₁ is arranged such that the laser radiation of wavelength λ₁ impinges upon the screening chip from a location having a negative z-coordinate relative to an xy plane defined by the screening chip and the irradiation unit for irradiating the screening chip with laser radiation of wavelength λ₂ is arranged such that the laser radiation of wavelength λ₂ impinges upon the screening chip from a location having a negative z-coordinate relative to an xy plane defined by the screening chip. Alternatively, the irradiation unit for irradiating the screening chip with laser radiation of wavelength λ₁ is arranged such that the laser radiation of wavelength λ₁ impinges upon the screening chip from a location having a positive z-coordinate relative to an xy plane defined by the screening chip and the irradiation unit for irradiating the screening chip with laser radiation of wavelength λ₂ is arranged such that the laser radiation of wavelength λ₂ impinges upon the screening chip from a location having a positive z-coordinate relative to an xy plane defined by the screening chip.

The apparatus for performing Variant (A2) of the method of the invention may therefore have the same arrangement of irradiation units as the apparatus for performing Variant (B) of the method of the invention. The difference between the apparatus for performing Variant (A2) and the apparatus for performing Variant (B) may therefore simply be in the nature of the screening and/or collection chips suitable for performing either variant of the method. Alternatively, the screening and/or collection chips employed for performing Variant (B) and Variant (A2) may be identical (subject to meeting the necessary requirements of transparency with respect to λ₁ and λ₂, as described above) and thus the apparatuses may be essentially identical (e.g. identical). In such an embodiment, the difference between performing Variant (A2) and Variant (B) would arise from inverting (flipping) the screening chip while performing Variant (A2) of the method whereas Variant (B) omits any inversion of the screening chip.

Where both the irradiation unit for irradiating the screening chip with laser radiation of wavelength λ₁ and the irradiation unit for irradiating the screening chip with laser radiation of wavelength λ₂ are arranged either
(i) such that the laser radiation of both wavelengths λ₁ and λ₂ impinges upon the screening chip from a location having a positive z-coordinate relative to an xy plane defined by the screening chip,
   or
(ii) such that the laser radiation of both wavelengths λ₁ and λ₂ impinges upon the screening chip from a location having a negative z-coordinate relative to an xy plane defined by the screening chip,
then in an embodiment the irradiation unit for irradiating the screening chip with laser radiation of wavelength λ₁ and the irradiation unit for irradiating the screening chip with laser radiation of wavelength λ₂ may be the same irradiation unit, or they may be separate irradiation units sharing a common objective (e.g. a lens or mirror common to both irradiation units).

In an embodiment, the screening chip and the irradiation unit for irradiating the screening chip with laser radiation of wavelength λ₂ and/or the irradiation unit for irradiating the screening chip with laser radiation of wavelength λ₁ may be moveable relative to one another. In particular, the screening chip and/or either or both irradiation units may be translatable in an xy plane defined by the chip or in a plane parallel to the xy plane defined by the chip so that desired locations on the chip may be brought into alignment with laser radiation emanating from the λ₁ irradiation unit and/or the λ₂ irradiation unit. If desired, the screening chip and/or either or both irradiation units may also be translatable in a z direction perpendicular to the xy plane defined by the chip in order to optimise the focus and/or beam shape of the λ₁ and/or λ₂ radiation. In an embodiment, the screening chip is mounted upon an xy translation stage or an xyz translation stage. Preferably any such xy or xyz translation stage should have a minimum step size of about 0.1 µm/step or less. In an embodiment, the translation stage is connected to mechanical translation means such as a motor or a servo. In an embodiment, the translation stage is manually translatable.

In performing the cell sorting method of the invention, it is necessary to identify and then selectively irradiate at least one target region. While it may in some embodiments be possible to locate a target region by eye and to align the laser source for radiation of wavelength λ₁ with this target region manually, this may not always be feasible, or may be a relatively slow and inaccurate method of achieving the necessary targeting precision. In order to identify a target region and to selectively irradiate this with radiation of wavelength λ₁, a coordinate system therefore preferably needs to be established such that the target region can be located. This is particularly important if, for example, the screening chip is flipped while performing the cell sorting method according to Variant (A), mode (A2), as herein described, and/or if multiple target regions are identified (e.g. each target region corresponding to a single cell of interest) at different locations on the screening chip.

A coordinate system may, for example, be established if the screening chip defines an xy plane. An arbitrary point may then be defined as point (0,0) on the screening chip such that any point in the plane of the screening chip (such as a cell and/or a well) has an xy coordinate relative to (0,0). Point (0,0) may if desired be an easily identifiable feature such as a reference mark or a particular well or a particular cell, but it may simply be an arbitrary location with no distinguishing features.

Preferably, therefore, the cell sorting apparatus of the invention further comprises a computer loaded with software for recording an xy coordinate of the sampling chip and/or an xy coordinate of the λ₁ and/or λ₂ irradiation units relative to the sampling chip. In this embodiment the sampling chip, the xy or xyz translation stage, and/or the λ₁ and/or λ₂ irradiation units are preferably connected to position-recording means for defining an xy coordinate and transmitting information about said xy coordinate to the computer. Particularly preferably the xy or xyz translation stage and/or the λ₁ and/or λ₂ irradiation units are connected to driving means (e.g. pushing means, a motor or a servo) for moving the xy or xyz translation stage and/or the λ₁ and/or λ₂ irradiation units to a desired xy coordinate upon instructions from the computer. For example, once a point (0,0) has been defined in the xy plane, the computer software may record an xy coordinate of the sampling chip or of the λ₂ irradiation unit corresponding to a location where Raman scattering signifying a cell of interest is detected. Upon instruction from the computer the sampling chip may then be moved to align that xy coordinate with the λ₁ irradiation unit, or the λ₁ irradiation unit may be moved to align the λ₁ irradiation unit with that xy coordinate. In this way the computer software at least partially automates the steps of identifying a target region and then aligning the target region with the λ₁ irradiation unit to ensure that the target region is selectively irradiated with laser radiation of wavelength λ₁.

Commercial software such as Labspec6 (from Horiba Scientific) may be employed for recording the xy coordinates and, if desired, for automating the alignment of the sampling chip and the λ₁ and/or λ₂ irradiation units.

One or more non-limiting examples will now be described, with reference to the accompanying drawings, in which:

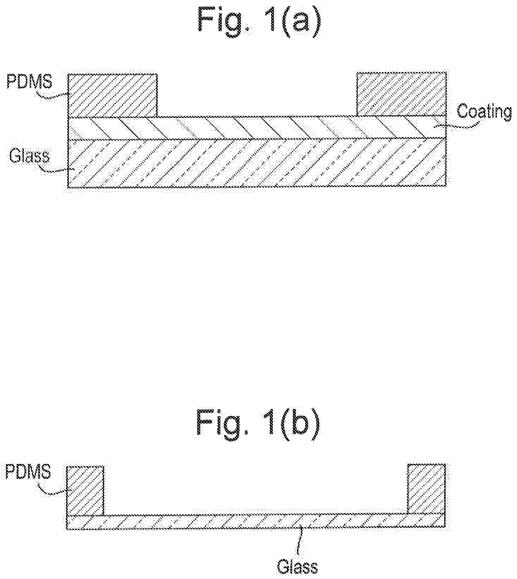

Figure 1 (a) shows an example of a screening chip as herein described. The first layer (substrate) may be any material transparent to λ₁, e.g. glass. The second layer (coating) can be vaporized by λ₁ and is, for example, 25nm aluminium. The coating can also contain multiple layers to provide more functionality, e.g. AI on top of a layer of (polyethylene naphthalate) PEN. The third layer, e.g. PDMS, may be present to introduce wells, e.g. a well layer/cell holding layer/sample layer. Although a single well is illustrated, the chip may contain more than one well. Figure 1(b) shows an example of a collection chip as herein described. The substrate may be glass. The second layer, e.g. PDMS, may be present to introduce wells, e.g. a well layer/cell holding layer/sample layer. Although a single well is illustrated, the chip may contain more than one well.

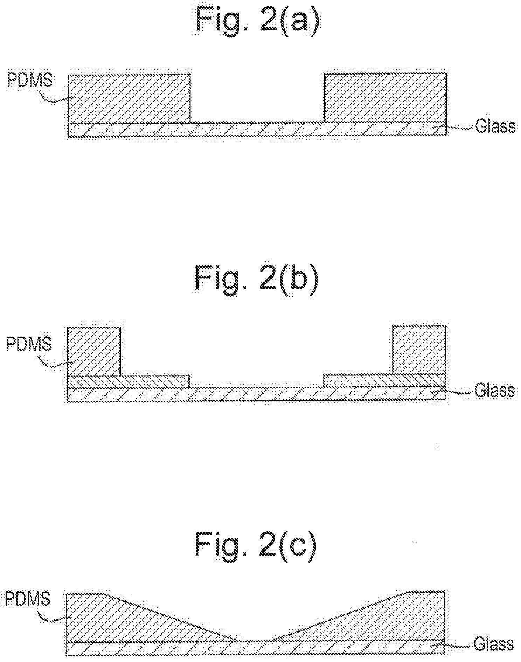

Figure 2 shows examples of alternative designs for the collection chip (A, B and C).

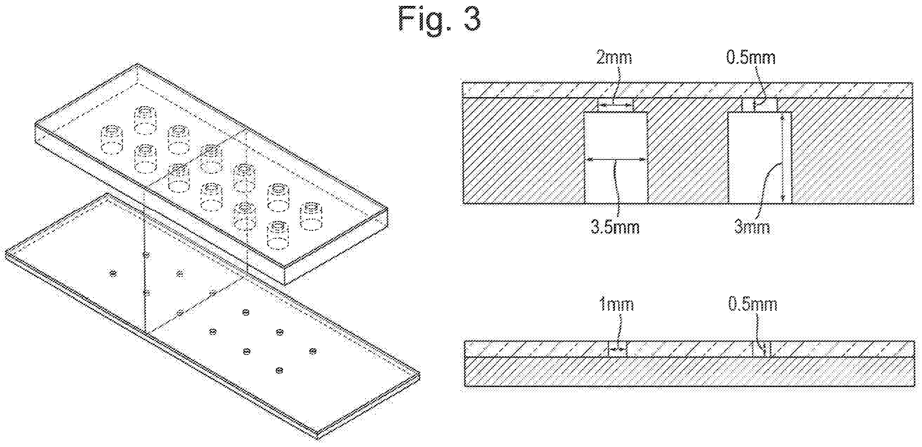

Figure 3 shows an example of the screening and collection ships in combination. The right hand figures show examples of diameters and depths of the screening chip (below) and collection chip (above).

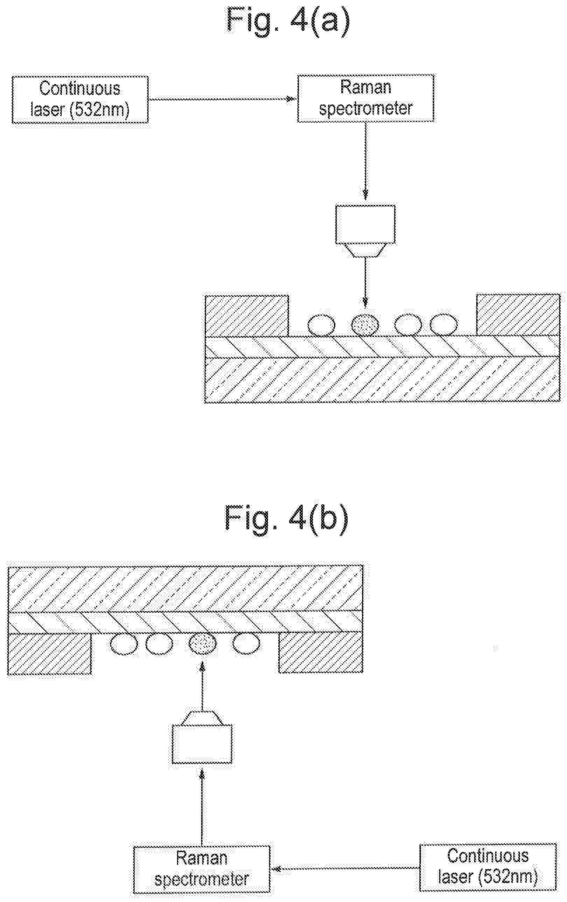

Figure 4 shows an example of the screening step, Fig. 4(a) from above, Fig. 4(b) from below.

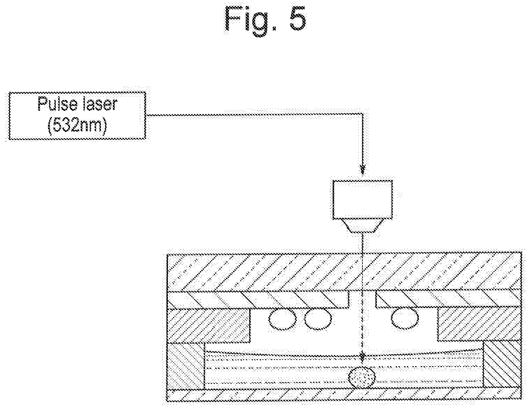

Figure 5 shows an example of cell ejection. The screening chip and collection chip are shown attached via their well layers. A pulse laser of 532 nm is shown, although other wavelengths may be used. When the pulse laser is through the same objective which is used in the Raman acquisition screening step, the chip may be flipped for the ejection/collection step.

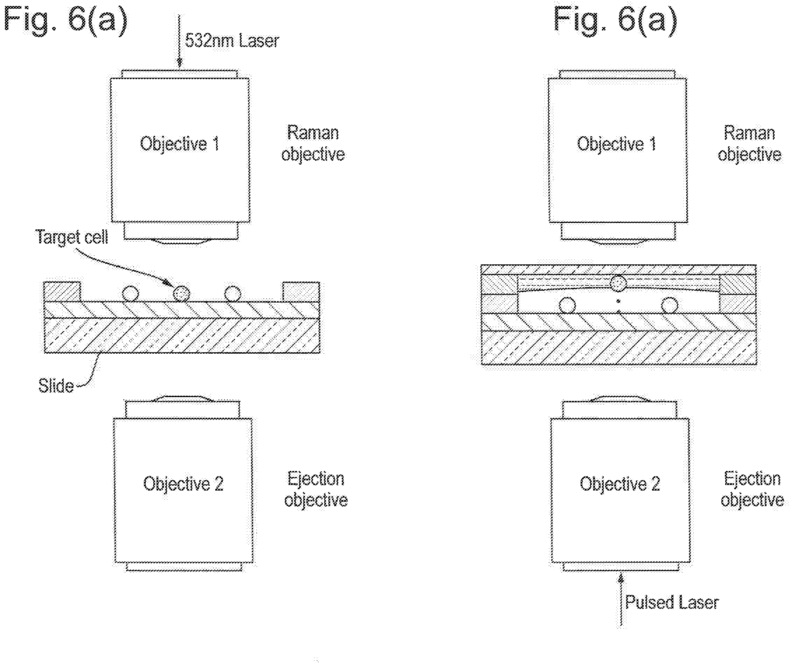

Figure 6 shows an example of the operation principle of the RACE system (a) cell identification process, (b) cell ejection process using two objectives. The Raman spectrometer is used to identify the cell in (a). Once the cells are identified, they are ready to be ejected in (b). This configuration employs two independent objectives and therefore there is no requirement to flip over the chip during the process.

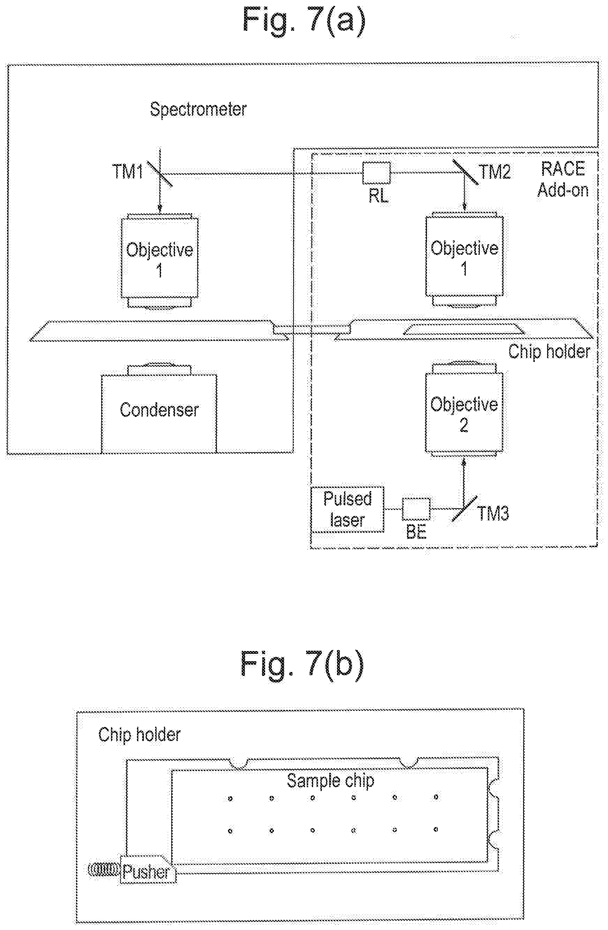

Figure 7 shows an example of (a) The optical layout of a RACE Add-on module; (b) Chip holder design with pusher. TM1, TM2, and TM3: are turning mirrors, RL is a relay lens, BE is a beam expander. These are used to adapt an existing spectrometer for use in the present invention.

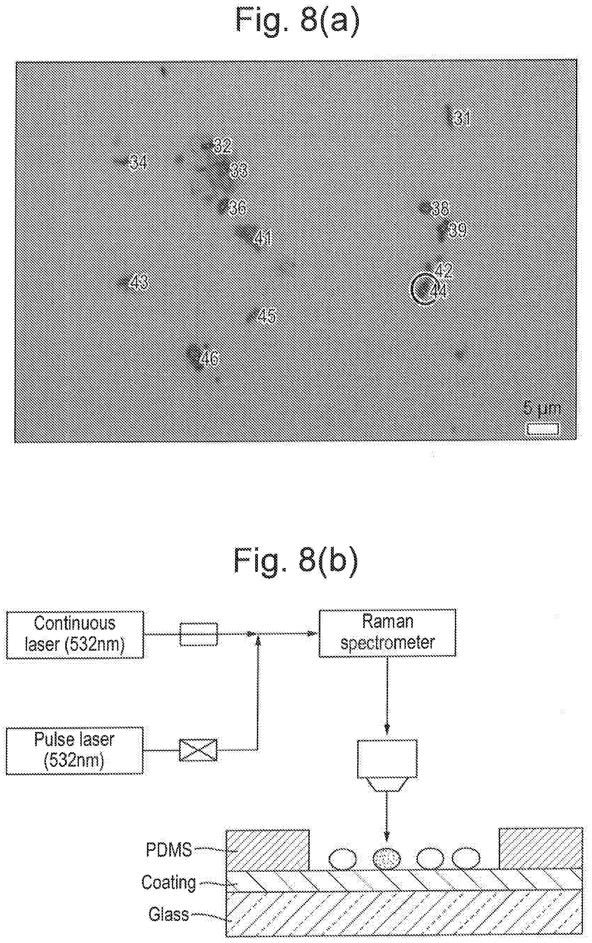

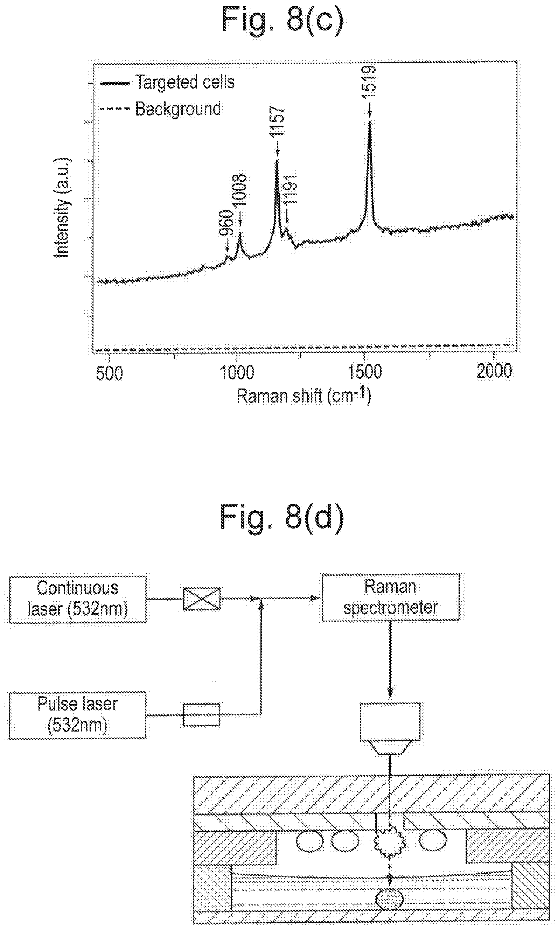

Figure 8 shows an exemplary illustration of Raman activated single cell ejection. (A) Microscopic image of cells on RACE chip. (B) The continuous laser is used for acquiring single cell Raman spectra. (C) Spectra of one single cell (top trace) and 25 nm aluminium coating background (bottom trace). (D) The RACE chip is turned over and the target cell is ejected into the collector by a pulse laser.

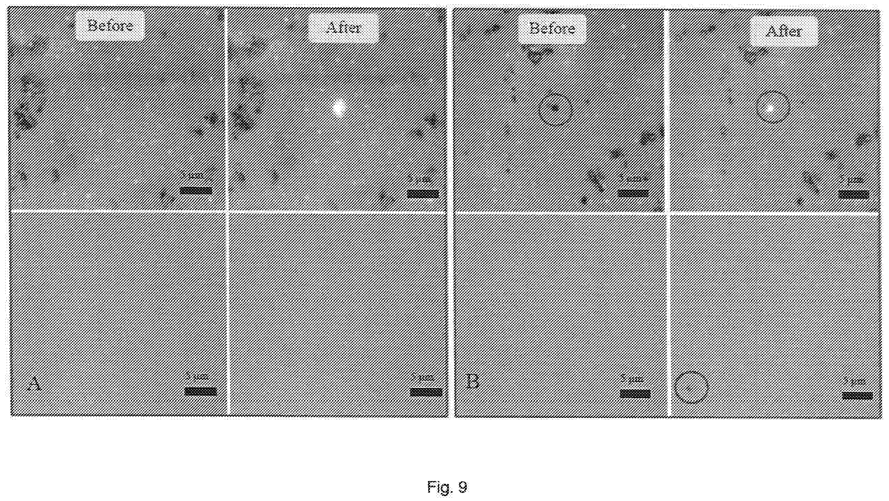

Figure 9 shows microscopy images of the RACE chip (top row) which holds seawater sample and the collector (bottom row) before and after applying the pulse laser. (A) Pulse laser focused at a position without cells. (B) Pulse laser focused on a cell.

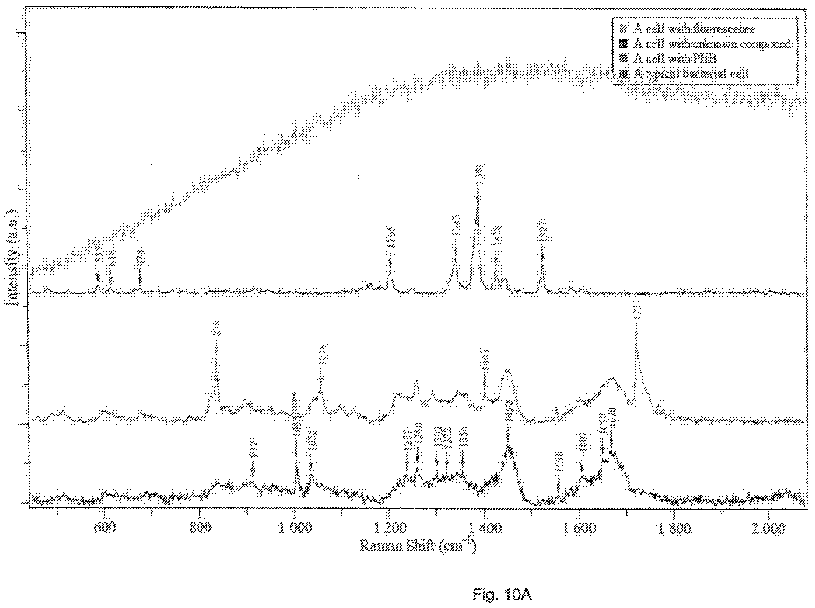

Figure 10 (A): Single cell Raman spectra of some typical bacteria in the Red Sea sample (traces (top to bottom): A cell with fluorescence; A cell with unknown compound; A cell with PHB; A typical bacterial cell). (B): Raman spectra of four groups of ejected cells. Each group contains 3-8 cells which had the same carotenoid spectra (traces (top to bottom): Cyanobacteria spp G610-8; Shigella spp S709-6; Pelomonas spp P610-5; Pelomonas spp P709-11).(C): Raman spectra of three groups of ejected individual cells (traces (top to bottom): Pelomonas spp P728-5; Bradyrhizobium spp B728-3; Halomonas spp H808-5). The positions of the carotenoid *v1, v2* and *v3* bands are labelled.

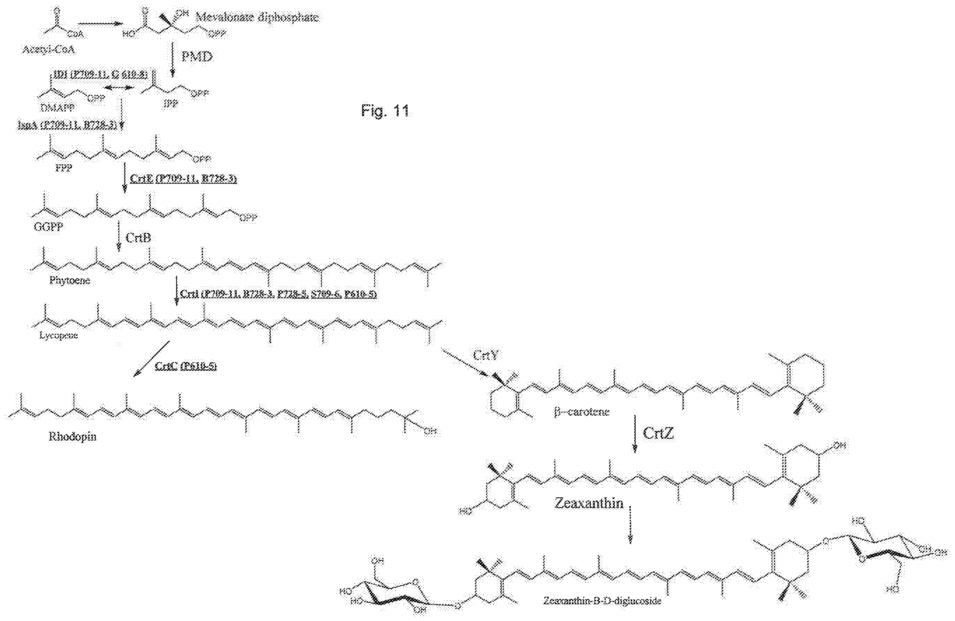

Figure 11: Gene identified from Red Sea water in bacterial carotenoid synthesis pathway. The proteins which are present in ejected cells are underlined. IDI: isopentenyl diphosphate isomerase (or IPI, isopentenlypyrophosphate isomerase); IspA: farnesyl diphosphate synthase; CrtE: Geranylgeranyl pyrophosphate synthase; CrtB: phytoene synthase; Crtl: phytoene desaturase (dehydrogenase); CrtC: hydroxyneurosporene synthase; CrtD: methoxyneurosporene dehydrogenase; CrtF: hydroxyneurosporene-O-methyltransferase; CrtY: lycopene cyclase; CrtZ: carotene hydroxylase; PMD: phosphomevalonate decarboxylase.

In a non-limiting exemplary embodiment of the present invention, the cell of interest is identified by a commercial spectroscope with a green laser (see Figure 6(a)). Afterwards, the target cell needs to be ejected by a pulsed green laser from the bottom using a second objective for DNA amplification (Figure 6(b)). This corresponds to a method according to variant (A1) of method (A) as described herein. In order to achieve RACE using the existing spectroscope, a RACE add-on Module has been developed. The optical setup is shown in Figure 7(a). A 45 degree turning mirror (TM1) is mounted on the spectrometer objective lens turret to deflect the green laser to the RACE module's input. Inside the RACS add-on, a dummy upright microscope is performed using a second 45 degree turning mirror (TM2), objective lens turret, objective (objective 1) and chip holder. For certain systems, e.g. Infinity corrected optical systems, the distance between the objective and tube lens can be varied. A relay lens (RL) can also be used between TM1 and TM2 to conjugate the objective back focal plane of the spectrometer and the objective back focal plane of the RACE add-on. The chip holder (Figure 6(b)) may be designed with a pushing system to locate the sample slide to the specified position. This design can provide repeatable alignment for the target cells on the sample slide. This slide holder can be attached to the existing spectrometer's motorized scanning stage or mounted on a separate motorized scanning stage. A green pulsed laser is used to eject the target cell from the bottom. A beam expander (BE) is used after the pulsed laser to expand the beam size to fill the ejection objective (objective 2) back aperture to achieved full numerical aperture (NA) application. This generates the laser induced forward transfer (LIFT) to isolate the cells. A 45 degree turning mirror (TM3) is used to deflect the beam upright to the ejection objective or high NA lens. As noted above, the RACE module can also be applied to a modified common microscope (e.g. sort cells based on morphology) and fluorescence microscope (e.g. sort cells based on fluorescence labelled cells) to achieve single cell isolation and subsequent single cell genomics.

It will be understood that the description above relates to a non-limiting example and that various changes and modifications may be made from the arrangement shown without departing from the scope of this disclosure, which is set forth in the accompanying claims.

The disclosure will now be further described by way of the following non-limiting Examples:

### Example 1 - Chip production

Slides with varying thickness of thin layer coating materials including Ti, TiO₂, Al, Au and Ag were purchased from Wellsens Biotech (Beijing, China) for the test. The metal layer coating was less than 100 nm to ensure transparency.

Examples of sampling and collection RACE chips designed for single cell genomics are illustrated in Fig. 3. To make collection RACE chips, multi-layered PDMS consisting of two concentric wells were fabricated. A PDMS layer (3 mm thick) was made by pouring a mixture of PDMS base and curing agent (Sylgard 184, Dow Corning) at a ratio of 10:1 (w/w) onto a silanised wafer in a container, followed by curing at 65 °C overnight. Small wells (with 3.5 mm diameter were then punched in the PDMS layer (Fig. 3). The second PDMS layer (0.5 mm thick) was made by spinning PDMS prepolymer on a silanised wafer at 200 rpm for 30 s, followed by curing at 65 °C for 1 h (Fig. 3). The two PDMS layers were bonded together using oxygen plasma treatment, and then 2 mm diameter holes were punched in the 0.5 mm thick PDMS layer concentrically to the 3.5 mm holes (Fig. 3). The resultant PDMS well block was irreversibly bonded onto a coverslip using oxygen plasma treatment. To make sampling RACE chips, single-layered 0.5 mm thick PDMS wells with 1 mm diameter upon thin layer coating slides were manufactured in a similar manner (Fig. 3).

Various coating materials including PEN (polyethylene naphthalate), PET (polyethylene terephthalate) and POL (polyester), TiO₂/Ti (75 nm), Indium-Tin Oxide (10 nm), Au (10 nm) and Al (10, 25, 50 and 100 nm) were examined to achieve RACE. The 532-nm pulsed laser (0.95 ns FWHM, Emax = 4.3 µJ, rep rate =0.1-16.6 kHz) was found to achieve single cell ejection on a thin PEN, PET, POL, TiO₂/Ti (75 nm), Au (10 nm) and Al (10 and 25 nm) coated slide. Al with 25 nm thickness resulted in good quality SCRS with minimal Raman background signal (Fig. 8C).

As discussed herein, other thicknesses of the layers and diameters of the holes are possible beyond those specifically illustrated in this Example and in Figure 3.

### Example 2 - Evaluation of Raman Background

Low Raman background is a key factor for the Raman spectra. This experiment was used to check whether the RACE add-on module (e.g. that shown in Fig. 7) induces extra Raman background. Background data with two Thorlabs 80mm lens (AC254-080-A) as a relay lens in place was recorded. This background signal was from both reflection and lens material, as no sample is mounted, only a black sheet after the 40X objective. In order to check whether the Raman background is from the lens material, Edmund lenses were tried for the same experiment and got similar results. Once the relay lenses were removed, almost no background signal was seen (only 100 count at peak compared with 900 peak count with relay lenses). According to the Raman background signal with 532nm excitation, the two peak signal is at 580nm and 610nm. These two peaks can be confirmed from the laser itself. Full power from the Raman spectrometer and 5 second acquisition time was used and thus this Raman background is still acceptable and could be improved through choice of lenses and emission filters into the spectrometer.

### Example 3 - Ejection laser power and beam size

A 532nm pulsed laser (CryLas DPSS 20µJ@1KHz, 1.3ns pulse width) was used to eject a target cell from the bottom of a screening chip. The minimum power using this laser to generate the laser induced forward transfer (LIFT) was 200pJ and the maximum power using this laser to generate LIFT with an acceptable spot was 2µJ.

### Example 4 - Cell Ejection

2µJ@1kHz laser power was applied to eject cell 500µm upright using the configuration shown in Fig. 7. A 40x/0.4 NA objection was used to perform the ejection process. Compared with the Olympus LMPLFLN 50X/0.5 NA, similar results are achieved. This experiment proves that this RACE module can be used for single cell ejection.

### Example 5 - Screening - Confocal Raman micro-spectroscopy and spectral processing

All chemicals used were purchased from Sigma-Aldrich (Dorset, UK) unless otherwise stated. *Escherichia coli* JM109 (Promega Co. UK) containing p18GFP was incubated at 37 °C in LB broth supplemented with 100 µg/L ampicillin.

Cells in concentrated Red Sea water samples (collected from the pier of the Inter-University Institute for Marine Sciences (IUI) in Eilat, Israel) were washed with deionised water before being analysed by Raman micro-spectroscopy. Each cellular suspension (1 µl) was mounted in the designed mini-wells of the RACE chip of Figure 3 (i.e. a screening chip according to the present invention) and allowed to air dry before Raman analysis.

The cells were examined by the Raman micro-spectroscopy using a continuous 532-nm laser (Fig. 8B). SCRS were used as sorting criteria to distinguish the phenotype of cells, and the positions of targeted cells were recorded (Fig. 8C).

The Raman spectra were acquired using a confocal Raman microscope (LabRAM HR Evolution, HORIBA Scientific, London, UK) equipped with an integrated microscope (BX41, Olympus). A 50× magnifying dry objective (MPLFLN, NA 0.8, Olympus, Essex, UK) was used to observe and acquire Raman signals from single cells. The laser beam position was calibrated and marked by software Labspec6 (HORIBA Scientific, London, UK). Cells were visualised by an integrated colour camera and a motorised XYZ stage (0.1 µm step). The Raman scattering was excited with a 532-nm Nd:YAG laser (Ventus, Laser Quantum, Manchester, UK). Grating 600 I/mm was used for Raman measurements, resulting in a spectral resolution of ∼1 cm⁻¹ with 1019 data points. The laser power on a single cell was about 0.5 mW. The detector was a -70 °C air-cooled charge coupled device detector (Andor, Belfast, UK). The system was run with a confocal pinhole diameter of 100 µm, enabling a spatial resolution of ∼ 1 µm to be obtained. LabSpec6 software was used to control the Raman system and acquire Raman spectra. Acquisition times for Raman spectra were 5 s for single cell measurements. The spatial location of each measured cell from the Red sea sample were recorded in Labspec6 (operating software for the Raman spectrometer) and used to identify cells for subsequent single cell ejection.

Labspec6 records the coordinates of each spot where the spectrum is obtained. A reference point on the slide was found and set to (0,0) in Labspec6, so that all cells measured would have a coordinates against that (0,0). Any other software that can record the precise movement of the sampling stage would also be appropriate. For example, any XYZ translation stage with minimum step size to fulfil the experimental requirement (0.1 µm/step) can be used to locate the cell. The programmable software is used to drive the stage and record the corresponding position. Alternatively, cells may be located merely by taking an image of the cell, and then finding the cell from that image.

Thus, SCRS was used as sorting criteria to distinguish the phenotypic profile of cells (in this case the presence of carotenoids in cells), and the positions of targeted cells were recorded (Fig. 8C).

### Example 6 - Collection - Integration of single cell ejection into a Raman micro-spectroscope

Following the screening step of Example 5, the RACE sampling chip was turned over and single cells of interest were ejected using the 532-nm pulse laser and harvested in a RACE collection chip (i.e. a collection chip according to the present invention, Fig. 8D and 3). In this study, because a continuous 532-nm laser light path was employed to guide the pulsed laser, the Al-coated slide (screening chip) was transparent to allow for locating and visualising of the cells after turning the slide over for cell ejection (Fig. 8D). However, a design such as that shown in Figure 6 would not require this transparency by placing the pulsed laser beneath the sampling chip.

A 532-nm pulse laser (ALPHALAS GmbH, Goettingen, Germany) was integrated into a confocal Raman microscope, sharing the same continuous laser (532-nm) light path and objective lens for SCRS measurement without changing mirrors and filters (Fig. 8). The peak power was 1.1 kW, about two magnitudes lower than the traditional UV microdissection lasers. An exposure test showed that the 532-nm pulse laser did indeed cause no damage to the mirror and edge filters in this LabRAM HR Evolution Raman microscope.

All the equipment and working surfaces were wiped with 10% (v/v) domestic bleach (Domestos, UK). All the consumables were autoclaved and exposed to a UV light bulb (254 nm) inside a UV sterilised Laminar Flow cabinet for 1 hour. The reagents were carefully sterilized.

1 µl of lysis buffer (500µl of SCG-grade water and 45.5 µl of 1M DTT were added to buffer DLB (single cell kit, Qiagen, UK) and aliquoted into UV sterilised Eppendorf tubes) and 1 µl TE buffer (Tris-EDTA buffer and DMSO: Tris-EDTA (pH=8) buffer and DMSO were filtered through a 0.2 µm filter and aliquoted into UV sterilised Eppendorf tubes) were added into each well on the collection chip which was then attached to the RACE screening chip. Alternatively, the liquid could be added after the cells are collected. The enclosed chips were moved to the stage of the Raman microscope with the RACE chip facing down. The target cells were located by their coordinates and confirmed by comparing the bright field image taken during Raman spectra acquisition. The laser spot was manually aligned to the coating layer under the target cell. Alternatively, this could be automated using software that moves the stage by input the target coordinates and then do an auto image alignment. The target cells were ejected by evaporation of the coating layer upon application of a 0.1 s exposure of 532 nm pulse laser and the cells were harvested in the collector. For a 12-well RACE chip, at least two control wells were also set up: one negative control, which remained cell-free, and one positive control, to which cell suspensions were added before whole genome amplification (WGA).

It was found that a 25-nm aluminium (Al) coating on a RACE sampling chip gave minimal Raman background (Fig. 8C). The thin coating was able to absorb the energy of the 532-nm pulse laser and eject a single cell sitting on it (Fig. 9). Fig. 9 shows that the Al (25 nm) coating material has been removed leaving a -1.5 µm mark on the coating slide after laser ejection. No observable Al material reached the collection chip after ejection in the blank controls, suggesting that Al was completely vaporized. Fig. 9B indicates that the single cell was accurately isolated and collected by the RACE collection chip.

### Example 7- Whole genome amplification on-chip

The enclosed chips were carefully moved to a laminar flow chamber and the two chips were separated. Cell suspension of 0.5 µl was added to the positive control well and a sterile coverslip was then placed on top of the collector chip. Cell lysis was carried out by three freeze-thaw cycles followed by heating at 65 °C for 10 min in a thermocycler (C1000, Bio-rad, UK). After adding 1 µl of Stop solution to neutralise the lysis buffer, 12 µl of reaction master mix was added to each well (Reaction buffer contained 1x Repliphi29 reaction buffer (Epicentre, US), 50µM random hexamers, 5% DMSO, 10mM DTT, dNTPs (0.4mM) and aliquoted into UV sterilised Eppendorf tubes). The collector chip was then covered by a coverslip and kept in the thermocycler at 30 °C with the hot lid activated and set at 70 °C. After incubation for 8 hours, the phi29 DNA polymerase was deactivated by heating to 65 °C for 10 min. The MDA product was transferred into sterilised 200 µl-PCR tubes for storage.

### Example 8 - Sorting carotenoid-containinq bacteria from a Red Sea sample base on their resonant Raman spectra

SCRS of 3,278 single cells from the surface seawater at Eilat were obtained and analysed, 31.4% of the analysed cells exhibited fluorescence and 68.6% of the cells had distinguishable SCRS for sorting. Fig. 10A shows examples of SCRS from the sample, including a typical bacterial cell, individual cells showing fluorescence, containing poly-β-hydroxybutyrate (PHB) and unknown compounds. Since SCRS reflect biochemical phenotypes of cells, cells can be sorted based on biomarker Raman bands of SCRS. For example, SCRS of a typical cell (Fig. 10A), the 1005 cm⁻¹ benzene ring breathing band (e.g. phenylalanine) is sharp and distinguishable and it shifts in response to ¹³C-incorporation, which can be used to link the cells to their metabolic activity of a ¹³C- substrate. Cells containing PHB gave distinguishable Raman biomarker at 839, 1058, 1403 and 1123 cm⁻¹ (Fig. 10A), which can be used to sort PHB containing cells.

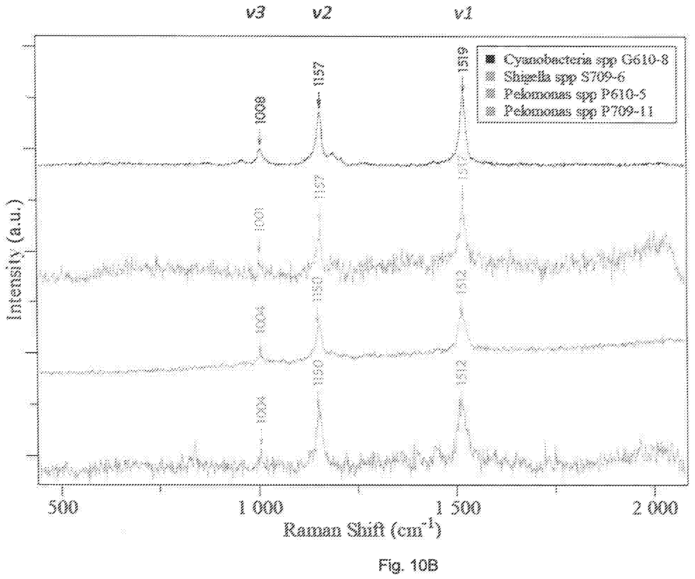

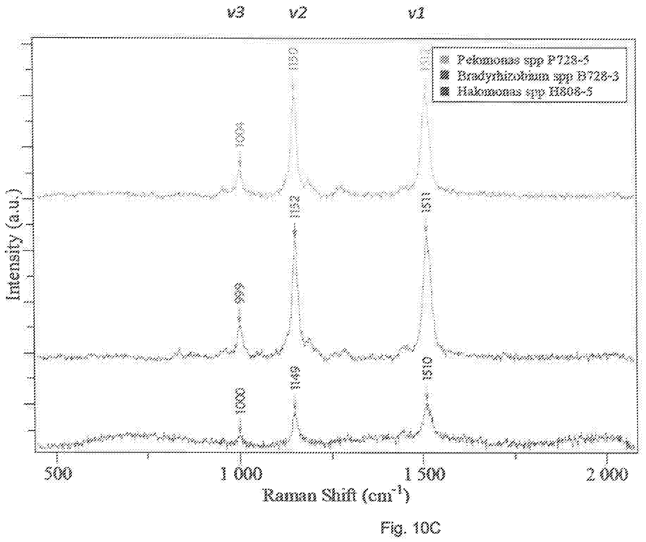

The characteristic *v1, v2* and *v3* Raman bands of carotenoids were used as sorting criteria. The *v1* band is the methyl rocking mode, and the *v2* and *v3* bands vary due to the different lengths of conjugated C=C bonds and stretching modes of C-C bonds. Since the Raman spectral resolution is about 1 cm⁻¹, variations in the positions of *v1, v2* and *v3* indicate the different structures of carotenoid presented in the cells (Fig. 3B and 3C). According to SCRS, 744 (22.7%) cells contained carotenoids (Fig. 10B and 10C). Based on their SCRS, four groups of carotenoid-containing cells were isolated with 3-8 cells in each group (Fig. 10B), and the position of *v*1, *v*2, *v*3 were exactly the same within each group. Three single cells were also isolated individually (Fig. 10C). Collectively these seven sorted samples could be resolved into five different types (Fig. 10B and 10C). Optical images of the sorted cells showed that the cells were small with size of 0.3-1 µm.

The estimated degree of putative contamination, based on multiple copies of universal marker genes with differing amino-acid sequences, was relatively low in all cases. However, sequence analyses also indicate low genome coverage of less than 20% in all cases, which might be due to UV treatment of the phi29 polymerase.

The recovered genes directly involved in carotenoid biosynthesis pathway are illustrated in Fig. 11. Specifically, isopentenyl diphosphate isomerase (IDI) and geranylgeranyl pyrophosphate synthase (*ispA*) are involved in making the colourless substrate farnesyl pyrophosphate (FPP) and phytoene dehydrogenase (*crt*I) is responsible for synthesis of red pigment lycopene (Fig. 11). Although no gene directly related to carotenoid synthesis was found in H808-5 (probably due to low genome coverage), this sample contain two types of putative shc (squalene-hopene cyclase) genes whose substrates are carotenoid compounds. These results validate the RACE method since the sorted cells should contain carotenoids according to their SCRS.

The method of the invention has therefore been shown to accurately isolate individual cells from the Red Sea sample based on the characteristics SCRS of carotenoids.

The above Examples illustrate Raman activated cell sorting coupled to single cell genomics. The RACE technology has been applied to a Red Sea sample, sorting out seven groups of carotenoid-containing cells and performing subsequent genome analyses. The design of the RACE chip enabled single cell genomics to be performed under standard laboratory conditions without access to an expensive and dedicated 'super-clean' facility.

The RACE chip of the present invention (e.g. Fig. 3) creates a sealed environment to perform single cell isolation and DNA amplification on-chip, significantly preventing cell or DNA contamination from the outside environment. Cells of interest have been directly isolated and ejected into prepared buffer in the collection well, enabling single cell DNA amplification on-chip without the need for cell transfer. By employing an advanced microfluidic device, the chip could perform on-chip cell cultivation, PCR, and even DNA sequencing.

## Claims

1. A screening chip for cell sorting, said screening chip comprising a substrate having opposing first and second surfaces, wherein at least a portion of said first surface is coated with a Raman-inactive coating material which can be vaporised by laser irradiation at a wavelength λ₁ and wherein said substrate is transparent to laser radiation at wavelength λ₁; **characterized in that** the Raman-inactive coating material is a composite comprising a Raman-inactive layer and a Raman-active layer, wherein the Raman-active layer is in contact with the substrate such that the Raman-inactive layer is separated from the substrate by the Raman-active layer.

2. A screening chip according to claim 1, further comprising a cell-holding layer adjacent to the Raman-inactive coating material, wherein said cell-holding layer comprises at least one well in which at least a portion of said Raman-inactive coating material is exposed; wherein optionally said cell-holding layer comprises a plurality of wells.

3. A screening chip according to any one of claims 1 to 2, wherein λ₁ is about 532 nm or about 1064 nm.

4. A screening chip according to any one of claims 1 to 3, wherein the Raman-inactive coating material is selected from aluminium, titanium, gold, silver, nickel, copper, platinum, palladium, and rhodium, mixtures thereof, the oxides thereof, mixtures of the oxides thereof, graphite, graphene, polyethylene naphthalate (PEN), polyethylene terephthalate, polyester, TiO₂, and mixtures and composites thereof; and wherein the Raman-inactive coating material has a thickness of 100 nm or less; and optionally wherein the Raman-inactive coating material is aluminium having a thickness of about 25 nm, or a composite of PEN and aluminium wherein the PEN forms a layer adjacent to the first surface of the substrate and the aluminium forms a 25 nm thick layer adjacent to the PEN layer and separated from the first surface of the substrate by the PEN layer.

5. A cell sorting method, said method comprising:
(i) providing a screening chip as defined in any one of claims 1 to 4, wherein said screening chip further comprises a plurality of cells;
(ii) irradiating said cells with laser radiation of wavelength λ₂ and detecting Raman scattering from the thus irradiated cells;
(iii) identifying a target region based on said Raman scattering, wherein said target region is a region of the first surface of the substrate of the screening chip coated with a Raman-inactive coating material and having at least one cell located adjacent thereto;
(iv) irradiating the screening chip with laser radiation of wavelength λ₁ such that said laser radiation of wavelength λ₁ impinges on the second surface of the substrate of the screening chip and is transmitted through the substrate from the second surface to the first surface to selectively irradiate the coating material in the target region, thereby vaporising at least a portion of the coating material in the target region, causing ejection of the at least one cell located adjacent thereto; and
(v) collecting the at least one ejected cell on a collection chip.

6. A cell sorting method according to claim 5, wherein in step (ii) said laser radiation of wavelength λ₂ impinges on said cells without travelling through the screening chip substrate.

7. A cell sorting method according to claim 5 or claim 6, wherein the screening chip defines an xy plane, the radiation of wavelength λ₁ impinges upon the screening chip from a location having a positive z-coordinate relative to the xy plane, and the radiation of wavelength λ₂ impinges upon the screening chip from a location having a negative or positive z-coordinate relative to the xy plane.

8. A cell sorting method according to claim 7, wherein the radiation of wavelength λ₂ impinges upon the screening chip from a location having a positive z-coordinate relative to the xy plane and the screening chip is inverted between step (ii) and step (iv).

9. A cell sorting method according to any of claims 5 to 8, wherein the collection chip is introduced between step (ii) and step (iv).

10. A cell sorting method according to any of claims 5 to 9, wherein λ₂ is ultraviolet radiation in the range of about 230 nm to about 390 nm, visible radiation in the range of about 400 nm to about 700 nm, or near infra-red radiation in the range of about 750 nm to about 1200 nm; and wherein the laser radiation of wavelength λ₂ is continuous-wave.

11. A cell sorting method according to any of claims 5 to 10, wherein λ₁ is 532 nm or 1064 nm; and wherein the laser radiation of wavelength λ₁ is pulsed.

12. A cell sorting apparatus, said apparatus comprising:
a screening chip as defined in any one of claims 1 to 4;
an irradiation unit for irradiating the screening chip with laser radiation of wavelength λ₂;
a detection unit for detecting Raman scattering from a cell sample on the screening chip;
an irradiation unit for irradiating the screening chip with laser radiation of wavelength λ₁ such that said laser radiation of wavelength λ₁ impinges on the second surface of the substrate of the screening chip and is transmitted through the substrate from the second surface to the first surface to selectively irradiate the Raman-inactive coating material in a target region thereof, thereby vaporising at least a portion of the coating material in the target region.

13. A cell sorting apparatus according to claim 12, wherein the irradiation unit for irradiating the screening chip with laser radiation of wavelength λ₂ and the detection unit for detecting Raman scattering are components of a confocal Raman microscope.

14. A cell sorting apparatus according to claim 12 or claim 13, wherein the irradiation unit for irradiating the screening chip with laser radiation of wavelength λ₁ is arranged such that the laser radiation of wavelength λ₁ impinges upon the screening chip from a location having a negative z-coordinate relative to an xy plane defined by the screening chip and the irradiation unit for irradiating the screening chip with laser radiation of wavelength λ₂ is arranged such that the laser radiation of wavelength λ₂ impinges upon the screening chip from a location having a positive or negative z-coordinate relative to an xy plane defined by the screening chip.

15. A cell sorting apparatus according to any one of claims 12 to 14, further comprising a computer loaded with software for recording an xy coordinate of the sampling chip and/or an xy coordinate of the irradiation unit for irradiating the screening chip with laser radiation of wavelength λ₁ and/or an xy coordinate of the irradiation unit for irradiating the screening chip with laser radiation of wavelength λ₂; wherein optionally the sampling chip, the irradiation unit for irradiating the screening chip with laser radiation of wavelength λ₁ and/or the irradiation unit for irradiating the screening chip with laser radiation of wavelength λ₂ are connected to driving means for moving the screening chip and/or the irradiation units relative to one another upon instruction by the computer.

## Patentansprüche

1. Screening-Chip zur Zellsortierung, wobei der Screening-Chip ein Substrat umfasst, das gegenüberliegende erste und zweite Oberflächen aufweist, wobei mindestens ein Abschnitt der ersten Oberfläche mit einem Raman-inaktiven Beschichtungsmaterial beschichtet ist, das durch Laserbestrahlung mit einer Wellenlänge λ₁ verdampft werden kann, und wobei das Substrat für Laserstrahlung mit der Wellenlänge λ₁ transparent ist;
**dadurch gekennzeichnet, dass** das Raman-inaktive Beschichtungsmaterial ein Verbundstoff ist, der eine Raman-inaktive Schicht und eine Raman-aktive Schicht umfasst, wobei die Raman-aktive Schicht in Kontakt mit dem Substrat steht, sodass die Raman-inaktive Schicht durch die Raman-aktive Schicht von dem Substrat getrennt ist.

2. Screening-Chip nach Anspruch 1, weiter umfassend eine an das Raman-inaktive Beschichtungsmaterial angrenzende zellhaltende Schicht, wobei die zellhaltende Schicht mindestens eine Mulde umfasst, in der mindestens ein Teil des Raman-inaktiven Beschichtungsmaterials freigelegt ist; wobei die zellhaltende Schicht optional eine Vielzahl von Mulden umfasst.

3. Screening-Chip nach einem der Ansprüche 1 bis 2, wobei λ₁ etwa 532 nm oder etwa 1064 nm beträgt.

4. Screening-Chip nach einem der Ansprüche 1 bis 3, wobei das Raman-inaktive Beschichtungsmaterial ausgewählt ist aus Aluminium, Titan, Gold, Silber, Nickel, Kupfer, Platin, Palladium und Rhodium, Mischungen davon, deren Oxiden, Mischungen der Oxide davon, Graphit, Graphen, Polyethylennaphthalat (PEN), Polyethylenterephthalat, Polyester, TiO₂ und Mischungen und Verbundstoffen davon; und wobei das Raman-inaktive Beschichtungsmaterial eine Dicke von 100 nm oder weniger aufweist; und optional wobei das Raman-inaktive Beschichtungsmaterial Aluminium mit einer Dicke von etwa 25 nm oder ein Verbundstoff aus PEN und Aluminium ist, wobei das PEN eine an die erste Oberfläche des Substrats angrenzende Schicht bildet und das Aluminium eine 25 nm dicke Schicht bildet, die an die PEN-Schicht angrenzt und von der ersten Oberfläche des Substrats durch die PEN-Schicht getrennt ist.

5. Zellsortierverfahren, wobei das Verfahren umfasst:
(i) Bereitstellen eines Screening-Chips, wie in einem der Ansprüche 1 bis 4 definiert, wobei der Screening-Chip weiter eine Vielzahl von Zellen umfasst;
(ii) Bestrahlen der Zellen mit Laserstrahlung der Wellenlänge λ₂ und Erfassen der Raman-Streuung an den so bestrahlten Zellen;
(iii) Identifizieren eines Zielbereichs auf der Grundlage der Raman-Streuung, wobei der Zielbereich ein Bereich der ersten Oberfläche des Substrats des Screening-Chips ist, der mit einem Raman-inaktiven Beschichtungsmaterial beschichtet ist und mindestens eine daran angrenzende Zelle aufweist;
(iv) Bestrahlen des Screening-Chips mit Laserstrahlung der Wellenlänge λ₁, sodass die Laserstrahlung der Wellenlänge λ₁ auf die zweite Oberfläche des Substrats des Screening-Chips auftrifft und durch das Substrat von der zweiten Oberfläche zur ersten Oberfläche durchgelassen wird, um das Beschichtungsmaterial im Zielbereich selektiv zu bestrahlen, wodurch mindestens ein Teil des Beschichtungsmaterials im Zielbereich verdampft wird, was einen Auswurf der mindestens einen daneben angeordneten Zelle bewirkt; und
(v) Sammeln der mindestens einen ausgeworfenen Zelle auf einem Sammelchip.

6. Zellsortierverfahren nach Anspruch 5, wobei in Schritt (ii) die Laserstrahlung der Wellenlänge λ₂ auf die Zellen auftrifft, ohne das Substrat des Screening-Chips zu durchdringen.

7. Zellsortierverfahren nach Anspruch 5 oder 6, wobei der Screening-Chip eine xy-Ebene definiert, die Strahlung der Wellenlänge λ₁ auf den Screening-Chip von einer Stelle mit einer positiven z-Koordinate relativ zur xy-Ebene auftrifft und die Strahlung der Wellenlänge λ₂ auf den Screening-Chip von einer Stelle mit einer negativen oder positiven z-Koordinate relativ zur xy-Ebene auftrifft.

8. Zellsortierverfahren nach Anspruch 7, wobei die Strahlung der Wellenlänge λ₂ von einer Stelle mit einer positiven z-Koordinate relativ zur xy-Ebene auf den Screening-Chip auftrifft und der Screening-Chip zwischen Schritt (ii) und Schritt (iv) invertiert wird.

9. Zellsortierverfahren nach einem der Ansprüche 5 bis 8, wobei der Sammelchip zwischen Schritt (ii) und Schritt (iv) eingeführt wird.

10. Zellsortierverfahren nach einem der Ansprüche 5 bis 9, wobei λ₂ Ultraviolettstrahlung im Bereich von etwa 230 nm bis etwa 390 nm, sichtbare Strahlung im Bereich von etwa 400 nm bis etwa 700 nm oder Strahlung im nahen Infrarotbereich im Bereich von etwa 750 nm bis etwa 1200 nm ist; und wobei die Laserstrahlung der Wellenlänge λ₂ ein Dauerstrich ist.

11. Zellsortierverfahren nach einem der Ansprüche 5 bis 10, wobei λ₁ 532 nm oder 1064 nm ist; und wobei die Laserstrahlung der Wellenlänge λ₁ gepulst ist.

12. Zellsortiereinrichtung, die Vorrichtung umfassen:
einen Screening-Chip, wie in einem der Ansprüche 1 bis 4 definiert;
eine Bestrahlungseinheit zur Bestrahlung des Screening-Chips mit Laserstrahlung der Wellenlänge λ₂;
eine Erfassungseinheit zum Erfassen von Raman-Streuung aus einer Zellprobe auf dem Screening-Chip;
eine Bestrahlungseinheit zum Bestrahlen des Screening-Chips mit Laserstrahlung der Wellenlänge λ₁, sodass die Laserstrahlung der Wellenlänge λ₁ auf die zweite Oberfläche des Substrats des Screening-Chips auftrifft und durch das Substrat von der zweiten Oberfläche zur ersten Oberfläche durchgelassen wird, um das Beschichtungsmaterial im Zielbereich selektiv zu bestrahlen, wodurch mindestens ein Teil des Beschichtungsmaterials im Zielbereich verdampft wird.

13. Zellsortiereinrichtung nach Anspruch 12, wobei die Bestrahlungseinheit zum Bestrahlen des Screening-Chips mit Laserstrahlung der Wellenlänge λ₂ und die Erfassungseinheit zum Erfassen von Raman-Streuung Bestandteile eines konfokalen Raman-Mikroskops sind.

14. Zellsortiereinrichtung nach Anspruch 12 oder Anspruch 13, wobei die Bestrahlungseinheit zum Bestrahlen des Screening-Chips mit Laserstrahlung der Wellenlänge λ₁ so angeordnet ist, dass die Laserstrahlung der Wellenlänge λ₁ auf den Screening-Chip von einer Stelle mit einer negativen z-Koordinate relativ zu einer durch den Screening-Chip definierten xy-Ebene auftrifft, und die Bestrahlungseinheit zum Bestrahlen des Screening-Chips mit Laserstrahlung der Wellenlänge λ₂ so angeordnet ist, dass die Laserstrahlung der Wellenlänge λ₂ auf den Screening-Chip von einer Stelle mit einer positiven oder negativen z-Koordinate relativ zu einer durch den Screening-Chip definierten xy-Ebene auftrifft.

15. Zellsortiereinrichtung nach einem der Ansprüche 12 bis 14, weiter umfassend einen Rechner, auf dem Software zur Aufzeichnung einer xy-Koordinate des Abtastchips und/oder einer xy-Koordinate der Bestrahlungseinheit zur Bestrahlung des Screening-Chips mit Laserstrahlung der Wellenlänge λ₁ und/oder einer xy-Koordinate der Bestrahlungseinheit zur Bestrahlung des Screening-Chips mit Laserstrahlung der Wellenlänge λ₂ geladen ist; wobei optional der Abtastchip, die Bestrahlungseinheit zum Bestrahlen des Screening-Chips mit Laserstrahlung der Wellenlänge λ₁ und/oder die Bestrahlungseinheit zum Bestrahlen des Screening-Chips mit Laserstrahlung der Wellenlänge λ₂ mit Treibermitteln zum Bewegen des Abschirmchips und/oder der Bestrahlungseinheiten relativ zueinander auf Anweisung durch den Rechner verbunden sind.

## Revendications

1. Puce de criblage pour le tri de cellules, ladite puce de criblage comprenant un substrat ayant des première et seconde surfaces opposées, dans laquelle au moins une portion de ladite première surface est revêtue d'une matière de revêtement inactive d'un point de vue Raman qui peut être vaporisée par irradiation laser à une longueur d'onde λ₁ et dans laquelle ledit substrat est transparent au rayonnement laser à la longueur d'onde λ₁;
**caractérisée en ce que**
la matière de revêtement inactive d'un point de vue Raman est un composé comprenant une couche inactive d'un point de vue Raman et une couche active d'un point de vue Raman, dans laquelle la couche active d'un point de vue Raman est en contact avec le substrat de sorte que la couche inactive d'un point de vue Raman est séparée du substrat par la couche active d'un point de vue Raman.

2. Puce de criblage selon la revendication 1, comprenant en outre une couche de maintien de cellules adjacente à la matière de revêtement inactive d'un point de vue Raman, dans laquelle ladite couche de maintien de cellules comprend au moins une alvéole dans laquelle au moins une portion de ladite matière de revêtement inactive d'un point de vue Raman est exposée; dans laquelle de manière facultative la couche de maintien de cellules comprend une pluralité d'alvéoles.

3. Puce de criblage selon l'une quelconque des revendications 1 à 2, dans laquelle λ₁ est d'environ 532 nm ou d'environ 1064 nm.

4. Puce de criblage selon l'une quelconque des revendications 1 à 3, dans laquelle la matière de revêtement inactive d'un point de vue Raman est sélectionnée parmi l'aluminium, le titane, l'or, l'argent, le nickel, le cuivre, le platine, le palladium et le rhodium, des mélanges de ceux-ci, les oxydes de ceux-ci, des mélanges des oxydes de ceux-ci, le graphite, le graphène, le naphtalate de polyéthylène (PEN), le polytéréphtalate d'éthylène, le polyester, TiO₂ et des mélanges et des composés de ceux-ci ; et dans laquelle la matière de revêtement inactive d'un point de vue Raman a une épaisseur de 100 nm ou moins; et de manière facultative dans laquelle la matière de revêtement inactive d'un point de vue Raman est de l'aluminium ayant une épaisseur d'environ 25 nm, ou un composé de PEN et d'aluminium dans lequel le PEN forme une couche adjacente à la première surface du substrat et l'aluminium forme une couche de 25 nm d'épaisseur adjacente à la couche de PEN et séparée de la première surface du substrat par la couche de PEN.

5. Procédé de tri de cellules, ledit procédé comprenant :
(i) la fourniture d'une puce de criblage telle que définie selon l'une quelconque des revendications 1 à 4, dans laquelle ladite puce de criblage comprend en outre une pluralité de cellules ;
(ii) l'irradiation desdites cellules avec un rayonnement laser de longueur d'onde λ₂ et la détection d'une diffusion Raman à partir des cellules ainsi irradiées ;
(iii) l'identification d'une région cible basée sur ladite diffusion Raman, dans laquelle ladite région cible est une région de la première surface du substrat de la puce de criblage revêtue d'une matière de revêtement inactive d'un point de vue Raman et ayant au moins une cellule située adjacente à celle-ci ;
(iv) l'irradiation de la puce de criblage avec un rayonnement laser de longueur d'onde λ₁ de sorte que ledit rayonnement laser de longueur d'onde λ₁ frappe la seconde surface du substrat de la puce de criblage et est transmis à travers le substrat à partir de la seconde surface jusqu'à la première surface pour irradier de manière sélective la matière de revêtement dans la région cible, vaporisant de ce fait au moins une portion de la matière de revêtement dans la région cible, provoquant l'éjection de l'au moins une cellule située adjacente à celle-ci ; et
(v) la collecte de l'au moins une cellule éjectée sur une puce de collecte.

6. Procédé de tri de cellules selon la revendication 5, dans lequel dans l'étape (ii) ledit rayonnement laser de longueur d'onde λ₂ frappe lesdites cellules sans voyager à travers le substrat de puce de criblage.

7. Procédé de tri de cellules le selon la revendication 5 ou la revendication 6, dans lequel la puce de criblage définit un plan xy, le rayonnement de longueur d'onde λ₁ frappe la puce de criblage à partir d'un emplacement ayant une coordonnée z positive par rapport au plan xy, et le rayonnement de longueur d'onde λ₂ frappe la puce de criblage à partir d'un emplacement ayant une coordonnée z négative ou positive par rapport au plan xy.

8. Procédé de tri de cellules selon la revendication 7, dans lequel le rayonnement de longueur d'onde λ₂ frappe la puce de criblage à partir d'un emplacement ayant une coordonnée z positive par rapport au plan xy et la puce de criblage est inversée entre l'étape (ii) et l'étape (iv).

9. Procédé de tri de cellules selon l'une quelconque des revendications 5 à 8, dans lequel la puce de collecte est introduite entre l'étape (ii) et l'étape (iv).

10. Procédé de tri de cellules selon l'une quelconque des revendications 5 à 9, dans lequel λ₂ est un rayonnement ultraviolet dans la plage d'environ 230 nm à environ 390 nm, un rayonnement visible dans la plage d'environ 400 nm à environ 700 nm, ou un rayonnement infrarouge proche dans la plage d'environ 750 nm à environ 1 200 nm ; et dans lequel le rayonnement laser de longueur d'onde λ₂ est une onde continue.

11. Procédé de tri de cellules selon l'une quelconque des revendications 5 à 10, dans lequel λ₁ est 532 nm ou 1 064 nm ; et dans lequel le rayonnement laser de longueur d'onde λ₁ est pulsé.

12. Appareil de tri de cellules, ledit appareil comprenant :
une puce de criblage telle que définie selon l'une quelconque des revendications 1 à 4;
une unité d'irradiation pour irradier la puce de criblage avec un rayonnement laser de longueur d'onde λ₂ ;
une unité de détection pour détecter une diffusion Raman à partir d'un échantillon cellulaire sur la puce de criblage ;
une unité d'irradiation pour irradier la puce de criblage avec un rayonnement laser de longueur d'onde λ₁ de sorte que ledit rayonnement laser de longueur d'onde λ₁ frappe la seconde surface du substrat de la puce de criblage et est transmis à travers le substrat à partir de la seconde surface jusqu'à la première surface pour irradier de manière sélective la matière de revêtement inactive d'un point de vue Raman dans une région cible de celle-ci, vaporisant de ce fait au moins une portion de la matière de revêtement dans la région cible.

13. Appareil de tri de cellules selon la revendication 12, dans lequel l'unité d'irradiation pour irradier la puce de criblage avec un rayonnement laser de longueur d'onde λ₂ et l'unité de détection pour détecter une diffusion Raman sont des composants d'un microscope Raman à foyer commun.

14. Appareil de tri de cellules selon la revendication 12 ou la revendication 13, dans lequel l'unité d'irradiation pour irradier la puce de criblage avec un rayonnement laser de longueur d'onde λ₁ est agencée de sorte que le rayonnement laser de longueur d'onde λ₁ frappe la puce de criblage à partir d'un emplacement ayant une coordonnée z négative par rapport à un plan xy défini par la puce de criblage et l'unité d'irradiation pour irradier la puce de criblage avec un rayonnement laser de longueur d'onde λ₂ est agencée de sorte que le rayonnement laser de longueur d'onde λ₂ frappe la puce de criblage à partir d'un emplacement ayant une coordonnée z positive ou négative par rapport à un plan xy défini par la puce de criblage.

15. Appareil de tri de cellules selon l'une quelconque des revendications 12 à 14, comprenant en outre un ordinateur chargé avec un logiciel pour enregistrer une coordonnée xy de la puce d'échantillonnage et/ou une coordonnée xy de l'unité d'irradiation pour irradier la puce de criblage avec un rayonnement laser de longueur d'onde λ₁ et/ou une coordonnée xy de l'unité d'irradiation pour irradier la puce de criblage avec un rayonnement laser de longueur d'onde λ₂ ; dans lequel de manière facultative la puce d'échantillonnage, l'unité d'irradiation pour irradier la puce de criblage avec un rayonnement laser de longueur d'onde λ₁ et/ou l'unité d'irradiation pour irradier la puce de criblage avec un rayonnement laser de longueur d'onde λ₂ sont reliées à un moyen d'entraînement pour déplacer la puce de criblage et/ou les unités d'irradiation l'une par rapport à l'autre lors d'une instruction par l'ordinateur.
